# EUROPEAN PATENT APPLICATION

(11) **EP 4 280 165 A1**
(43) Date of publication of application: **22.11.2023**
(21) Application number: 22739620.7
(22) Date of filing: 11.01.2022
(51) Int. Cl.: G06T 19/00, G06F 3/04815, G06F 3/0484, G06F 3/01, G06T 19/20, G06Q 30/02, G01C 21/36, B60K 35/00

(54) **NAVIGATION DEVICE LINKED TO VEHICLE, AR PLATFORM APPARATUS, AR PLATFORM SYSTEM COMPRISING SAME, AND OPERATION METHOD**

(30) Priority: 12.01.2021 KR 20210004116
(71) Applicant: LG Electronics, Inc., Yeongdeungpo-gu Seoul 07336 (KR)
(72) Inventor: LEE, Jinsang, Seoul 06772 (KR)
(74) Representative: Mooser, Sebastian Thomas
(86) International application number: PCT/KR2022/000442
(87) International publication number: WO 2022/154425

(57) **Abstract**

Disclosed are a navigation device linked to a vehicle, an augmented reality (AR) platform apparatus, an AR platform system including the same, and an operating method thereof. The navigation device linked to the vehicle according to the present disclosure may operate to present an AR coupon in a driving image acquired through a vision sensor of the vehicle and to download a coupon corresponding to the AR coupon when the vehicle passes through a location where the AR coupon is displayed. By providing coupon information filtered based on user information and/or sensing data of the vehicle as an AR coupon in the driving image of the vehicle, it is possible to intuitively provide coupon information useful and suitable for a driver.

## Description

### Technical Field

The present disclosure relates to a navigation device linked to a vehicle, an augmented reality (AR) platform device, an AR platform system including the same, and an operating method thereof, and more particularly, to a navigation device linked to a vehicle implemented to acquire a downloadable AR coupon presented during driving, an AR platform, an AR platform system including the same, and an operating method thereof.

### Background Art

For safety and convenience of a user who uses a vehicle, various sensors and devices are disposed at the vehicle, and functions of the vehicle are diversified. The functions of the vehicle may be divided into a convenience function for promoting driver's convenience, and a safety function for enhancing safety of the driver and/or pedestrians.

The convenience function of the vehicle has a development motive associated with the driver's convenience, such as providing infotainment (information + entertainment) to the vehicle, supporting a partially autonomous driving function, or helping the driver ensuring a field of vision at night or at a blind spot. For example, the convenience functions may include various functions, such as an active cruise control (ACC), a smart parking assist system (SPAS), a night vision (NV), a head up display (HUD), an around view monitor (AVM), an adaptive headlight system (AHS), and the like.

The safety function of the vehicle is a technique of ensuring safeties of the driver and/or pedestrians, and may include various functions, such as a lane departure warning system (LOWS), a lane keeping assist system (LKAS), an autonomous emergency braking (AEB), and the like.

Recently, a technology for augmented reality (AR) that outputs a graphic object through a vehicle's windshield or head-up display (HUD) or that outputs a graphic object to an image captured by a camera to additionally output the graphic object to the real world is being actively developed. In particular, by utilizing such AR technology, the development of technologies for guiding a route to a driver through AR technology or for exposing various additional information or advertisements related to points of interest (POI) existing on a route is expanding.

Meanwhile, various guidance or advertisements through AR technology are expressed in the form of AR objects over an actual driving image. Thus, there was a sense of separation from reality, and there were limitations in providing a variety of information at once.

Also, there is a limitation in that when various announcements or advertisements through augmented reality (AR) technology are displayed on a driving image as described above, a building's shape based on a driver's viewing angle, a vehicle driving situation, a driver's individual tendency, and nearby traffic and structural environments cannot be flexibly reflected.

Meanwhile, coupon information may be presented by expanding various guides or advertisements through augmented reality (AR) technology. However, there are problems about which coupon information is to be displayed using AR technology and how a driver can obtain the displayed coupon information, in that the purpose of this coupon information is not to provide information but for the user to obtain and use it to receive final benefits.

### Disclosure of Invention

### Technical Problem

The present disclosure aims to solve the above and other problems.

According to some embodiments of the present disclosure, an object of the present disclosure is to provide a vehicle-linked navigation device capable of providing augmented reality (AR) digital signage similar to a real signboard on a driving image of a vehicle, an AR platform apparatus, an AR platform system including the same, and an operating method thereof.

Also, according to some embodiments of the present disclosure, another object of the present disclosure is to provide a vehicle-linked navigation device capable of providing not one piece of but a plurality of pieces of AR digital signage at positions corresponding to a plurality of points of interest (POIs) of a building on a floor-by-floor basis, an AR platform apparatus, an AR platform system including the same, and an operating method thereof.

Also, according to some embodiments of the present disclosure, still another object of the present disclosure is to provide a vehicle-linked navigation device capable of receiving coupon information regarding information on nearby POIs in the form of an AR object while the vehicle is driving and capable of automatically acquiring coupons without interfering with the vehicle driving, an AR platform apparatus, an AR platform system including the same, and an operating method.

### Solution to Problem

To this end, a navigation device linked to a vehicle according to the present disclosure may operate to present an augmented reality (AR) coupon in a driving image acquired through a vision sensor of the vehicle and to download a coupon corresponding to the AR coupon when the vehicle passes through a location where the AR coupon is displayed.

To this end, the navigation device communicates with an AR platform providing apparatus for associating map information including point of interest (POI) information with coupon information collected based on the current location of the vehicle, performing filtering based on sensing data of the vehicle, and performing a rendering request for the AR coupon.

Also, the AR platform providing apparatus may request coupon registration by delivering information on the coupon downloaded by the navigation device in communication with a server for managing coupons. Then, the server registers the coupon after validation based on the received coupon information.

Also, one or more mobile terminals may execute a preset application to access the navigation device and the AR platform providing apparatus and may download the registered coupon from the server on the basis of the result of user authentication.

A navigation device linked to a vehicle according to the present disclosure may include a communication unit configured to communicate with a system for providing an AR platform. Also, the system may include a coupon service interface configured to communicate with a server for managing coupons through an interface of the system. Also, the system may include a control unit configured to control the communication unit to collect coupon information associated with the current location of the vehicle and transmit a request for associating the coupon information with map information to the system. Here, the control unit may receive a result of the request from the system, recognize a location of POI information corresponding to coupon information filtered based on sensing data of the vehicle among the coupon information associated with the map information, and transmit, to the system, a rendering request for displaying an AR coupon corresponding to the filtered coupon information in a display area determined based on the location of the POI information. Also, the control unit may receive a result of the rendering request, map and display the AR coupon in the display area included in a driving image acquired through a vision sensor of the vehicle in real time, download a coupon corresponding to the AR coupon on the basis of information on a distance between the vehicle and the display area of the AR coupon, transmit information related to the downloaded coupon to the system, and request the system to upload the information related to the downloaded coupon to the server for managing coupons.

In an embodiment, when it is determined based on the sensing data of the vehicle that the distance between the current location of the vehicle and the display area of the AR coupon is less than or equal to a predetermined threshold distance, the control unit may download the coupon corresponding to the AR coupon and transmit the information related to the downloaded coupon to the system.

In an embodiment, the information related to the downloaded coupon may include user information, point-of-interest (POI) information, and coupon information corresponding to the downloaded coupon.

In an embodiment, in response to a selection input for the AR coupon mapped and displayed in the display area of the driving image, the control unit may selectively download the coupon corresponding to the AR coupon.

In an embodiment, the display area determined based on the location of the POI information may be associated with the current location of the vehicle and a preset destination.

In an embodiment, when the POI information is set as a destination and a distance from the current location of the vehicle to the preset destination is greater than or equal to a threshold distance range, the control unit may determine the front or side of a building area including the destination as a display area and map and display the AR coupon in the determined display area in a digital signage form.

In an embodiment, when the POI information is set as a destination and a distance from the current location of the vehicle to the preset destination is less than a threshold distance range, the control unit may display an AR carpet for guiding entry to the destination on a road in the driving image as a display area and may sequentially map and display the AR coupon on the AR carpet.

In an embodiment, while the AR carpet is displayed on the road in the driving image, a varied AR coupon may be mapped and displayed on the front or side of the building area including the destination in a digital signage form.

In an embodiment, when the vehicle passes through the location of the POI information corresponding to the AR coupon, the control unit may download the coupon corresponding to the AR coupon and transmit the information related to the downloaded coupon to the system.

In an embodiment, when the vehicle enters the building area including the POI information corresponding to the AR coupon, the control unit may download a plurality of coupons corresponding to a plurality of AR coupons included in the building area and transmit information related to the plurality of downloaded coupons to the system.

In an embodiment, the communication unit may include a module configured to access a mobile terminal and perform communication, and the control unit may display identification information of the downloaded coupon on a display unit to share the downloaded coupon with the mobile terminal and request the mobile terminal to read the identification information to access the system and download a coupon uploaded to the server on the basis of a result of user authentication.

According to an embodiment of the present disclosure, an augmented reality (AR) platform providing apparatus linked to a vehicle may include a communication module configured to communicate with a navigation device linked to the vehicle, a coupon management interface configured to communicate with a server for managing coupons, a memory; and at least one processor communicatively connected to the memory and configured to execute at least computer-readable program included in the memory. In this case, the at least one program may include an instruction to receive coupon information associated with the current location of the vehicle from the server and associate the coupon information with map information in response to a request received from the navigation device and filter the received coupon information on the basis of sensing data of the vehicle. Also, the at least one program may include an instruction to perform a rendering request for displaying an AR coupon corresponding to the coupon information in a display area determined based on point-of-interest (POI) information corresponding to the coupon information. Also, the at least one program may include an instruction to transmit a result of the rendering request to the navigation device and transmit a request for the navigation device to map an AR coupon corresponding to the result of the rendering request in the display area included in a driving image acquired through a vision sensor in real time. Also, the at least one program may include an instruction to transmit registration information of the coupon corresponding to the AR coupon to the server to download the AR coupon on the basis of distance information between the location of the vehicle and the display area to which the AR coupon is mapped.

In an embodiment, the registration information of the coupon may include coupon information, a usage status, an expiration date, POI information, and user information of the coupon.

In an embodiment, the filtering of the received coupon information may be performed based on the sensing data of the vehicle including status information of the vehicle, information on the current location of the vehicle, information on a preset destination, and information on a driving time of the vehicle.

The communication module may further include a sub-module for performing communication with a mobile terminal, and in response to receiving a signal for accessing the AR platform providing apparatus through a preset application, the processor may request the mobile terminal to perform user authentication and download a coupon uploaded to the server on the basis of a result of the user authentication.

In an embodiment, when it is determined based on the sensing data of the vehicle that a distance between the current location of the vehicle and the display area of the AR coupon is less than or equal to a predetermined threshold distance, the processor may download the coupon corresponding to the AR coupon, transmit the coupon to the navigation device, and transmit information related to the downloaded coupon to the server.

Also, an augmented reality (AR) platform providing system according to the present disclosure may include a server for managing coupons, an AR platform providing apparatus configured to communicate with the server, a navigation device linked to a vehicle, and a mobile terminal. Here, the AR platform providing apparatus may receive coupon information associated with the current location of the vehicle from the server and associate the coupon information with map information in response to a request received from the navigation device, filter the received coupon information on the basis of sensing data of the vehicle, and perform a rendering request for displaying an AR coupon corresponding to the coupon information in a display area determined based on point-of-interest (POI) information corresponding to the coupon information. Also, the navigation device may receive a result of the rendering request, map and display, in real time, an AR coupon corresponding to the received result in the display area included in a driving image acquired through a vision sensor, download a coupon corresponding to the AR coupon when it is detected that the vehicle approaches within a certain range from the display area of the AR coupon, and transmit information related to the downloaded coupon to the system to request the system to upload the information related to the downloaded coupon to the server. Also, the server may perform validation of the information related to the downloaded coupon received from the system and store the information related to the downloaded coupon in a database and register the coupon on the basis of a result of the validation. Also, the mobile terminal may execute a preset application to access the AR platform providing apparatus and download a coupon uploaded to the server on the basis of a result of the user authentication.

### Advantageous Effects of Invention

The advantages effects of the digital signage platform providing apparatus, the operating method thereof, and the system including the same according to the present disclosure are as follows.

According to some embodiments of the present disclosure, by mapping augmented reality (AR) signage to a building in a driving image and displaying the AR signage to be closely similar to a real signboard, it is possible to solve the awkwardness caused by artificially displaying an AR object on a driving route screen in a conventional manner.

According to some embodiments of the present disclosure, it is possible to solve the conventional limitation of displaying only one advertisement in one area even if augmented reality (AR) technology is used, and thus advantageously, it is possible to provide extensibility for providing a plurality of various advertisements to one building.

According to an embodiment of the present disclosure, by linking map information and coupon information and providing coupon information filtered based on user information and/or sensing data of a vehicle as an AR coupon in a driving image of the vehicle, it is possible to intuitively provide coupon information useful and suitable for a driver.

According to an embodiment of the present disclosure, when a vehicle approaches an AR coupon, the vehicle can download the coupon without an additional operation for acquiring the coupon. Thus, it is possible to naturally acquire coupons while performing safe driving. Also, by allowing a user to easily share a coupon downloaded through a vehicle using a mobile terminal, usability is also enhanced.

### Brief Description of Drawings

FIG. 1 is a diagram illustrating an exemplary vehicle according to an implementation.
FIG. 2 is a diagram illustrating the vehicle according to the implementation at various angles.
FIGS. 3 and 4 are diagrams illustrating the interior of the vehicle.
FIGS. 5 and 6 are diagrams illustrating various objects related to driving (traveling) of the vehicle.
FIG. 7 is a block diagram illustrating the vehicle in accordance with the implementation.
FIG. 8 is a block diagram showing communication with a digital signage platform providing apparatus, a user terminal, and a cloud server according to an embodiment of the present disclosure.
FIG. 9 is a block diagram showing that an information processing system related to an embodiment of the present disclosure communicates with a plurality of user terminals.
FIG. 10 is a diagram illustrating a configuration of a digital signage platform providing apparatus according to an embodiment of the present disclosure.
FIG. 11 is a representative flowchart illustrating an operating method of a digital signage platform providing apparatus according to an embodiment of the present disclosure.
FIGS. 12 and 13 are diagrams illustrating a method of arranging AR digital signage in a building area of a driving image on a floor-by-floor basis according to an embodiment of the present disclosure.
FIG. 14 is a diagram illustrating a method of selecting a display area of floorwise augmented reality (AR) digital signage on the basis of the shape of a building area according to an embodiment of the present disclosure.
FIG. 15 is a diagram illustrating a method of selecting a display area of floorwise AR digital signage on the basis of vehicle driving information according to an embodiment of the present disclosure.
FIG. 16 is a diagram illustrating a method of mapping floorwise AR digital signage to an AR carpet rather than a building according to an embodiment of the present disclosure.
FIG. 17 is a diagram showing an aspect in which an AR platform providing apparatus, a vehicle navigation device, a coupon server, and a mobile terminal communicate with each other according to an embodiment of the present disclosure.
FIG. 18 is a representative flowchart illustrating a method of acquiring an AR coupon according to the operation of the navigation device and the AR platform providing apparatus according to an embodiment of the present disclosure.
FIG. 19 is a diagram illustrating a method of acquiring a coupon on the basis of a distance between an AR coupon and the current location of a vehicle according to an embodiment of the present disclosure.
FIG. 20 is a diagram illustrating a method of selectively acquiring a presented AR coupon according to an embodiment of the present disclosure.
FIGS. 21, 22, and 23 are diagrams illustrating a method of changing the displaying of an AR coupon according to how close a vehicle is to its destination when a POI location corresponding to the AR coupon is set as the destination according to an embodiment of the present disclosure.
FIG. 24 is a diagram related to the description of the acquisition time and range of an AR coupon according to an embodiment of the present disclosure.
FIG. 25 is a diagram illustrating a method of a mobile terminal sharing coupon information downloaded to a vehicle navigation device according to an embodiment of the present disclosure.
FIGS. 26, 27, and 28 are exemplary diagrams illustrating a method of displaying, linking, and using coupon information shared with a mobile terminal according to an embodiment of the present disclosure.
FIG. 29 is a block diagram illustrating a method of operating a vehicle navigation device in conjunction with a vehicle, a coupon server, and an AR platform providing apparatus according to an embodiment of the present disclosure.

### Mode for the Invention

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In describing the present disclosure, if a detailed explanation for a related known function or construction is considered to unnecessarily divert the gist of the present disclosure, such explanation has been omitted but would be understood by those skilled in the art. The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the another element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

A vehicle according to an embodiment of the present disclosure may be understood as a conception including cars, motorcycles and the like. Hereinafter, the vehicle will be described based on a car.

The vehicle according to the embodiment of the present disclosure may be a conception including all of an internal combustion engine car having an engine as a power source, a hybrid vehicle having an engine and an electric motor as power sources, an electric vehicle having an electric motor as a power source, and the like.

In the following description, a left side of a vehicle refers to a left side in a driving direction of the vehicle, and a right side of the vehicle refers to a right side in the driving direction.

In the present disclosure, "system" may include at least one of a server apparatus and a cloud apparatus, but is not limited thereto. For example, the system may be composed of one or more server apparatuses. As another example, the system may be composed of one or more server apparatuses. As still another example, the system may be operated by configuring a server apparatus and a cloud apparatus.

In the present disclosure, a "user terminal" or "user client" may be referred to as including a computing device and/or system or a user of a user terminal capable of communicating with a vehicle (or a vehicular electronic device, apparatus, or system provided in a vehicle) and an AR digital signage platform providing apparatus or system.

In the present disclosure, a "digital signage platform" may provide an embedded, an apparatus-based, or a cloud-based platform capable of Platform as a Service (PaaS) and/or Machine Learning as a Service (MLaaS). This digital signage platform is related to a method or operation of providing AR digital signage.

In the present disclosure, "map information" may be referred to as including images captured by a vision sensor such as a camera, two-dimensional (2D) map information, three-dimensional (3D) map information, a digital-twin 3D map, and map information in real/virtual space.

In the present disclosure, "point of interest (POI) information" indicates a point of interest selected based on the map information and may include pre-registered POI information (POIs stored in a map of a cloud server), user-set POI information (e.g., home, school, company, etc.), driving-related POI information (e.g., destination, stopover, gas station, rest area, parking lot, etc.). Such POI information may be updated based on the current location of the vehicle in real time.

In the present disclosure, "driving image" is obtained through a vision sensor of or near a vehicle and, for example, may include an image acquired or projected through a vision sensor (a camera, a laser sensor for images, etc.) during the driving of the vehicle and a real image or a virtual space image projected onto the vehicle's windshield. That is, the driving image may be referred to as including an image output through a display, an image projected through a laser sensor, or a real image seen through a vehicle windshield.

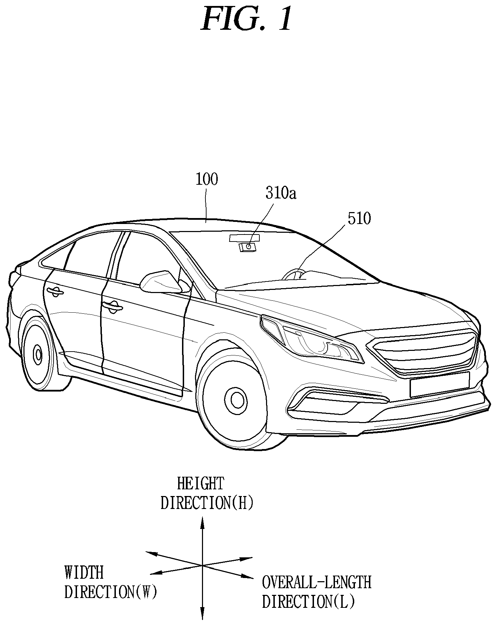

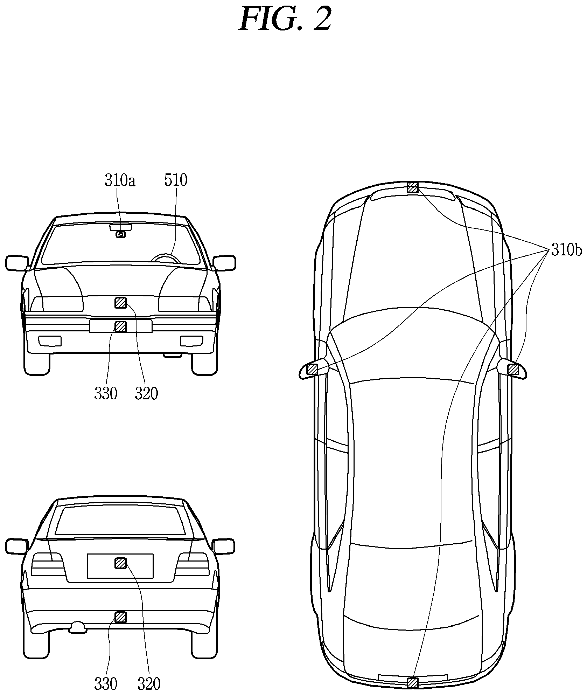

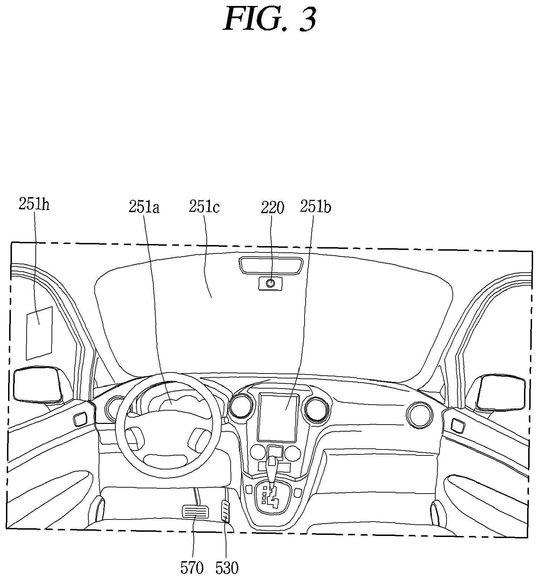

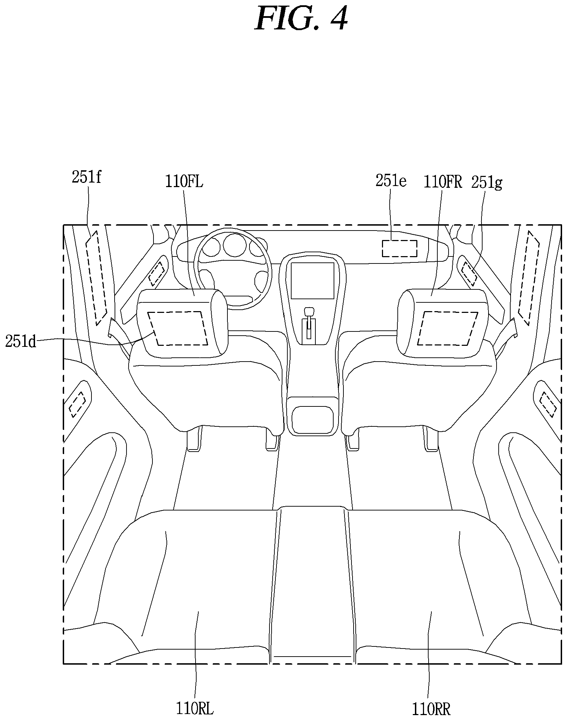

FIGS. 1 and 2 illustrate the exterior of a vehicle according to an implementation and FIGS. 3 and 4 illustrate the interior of the vehicle.

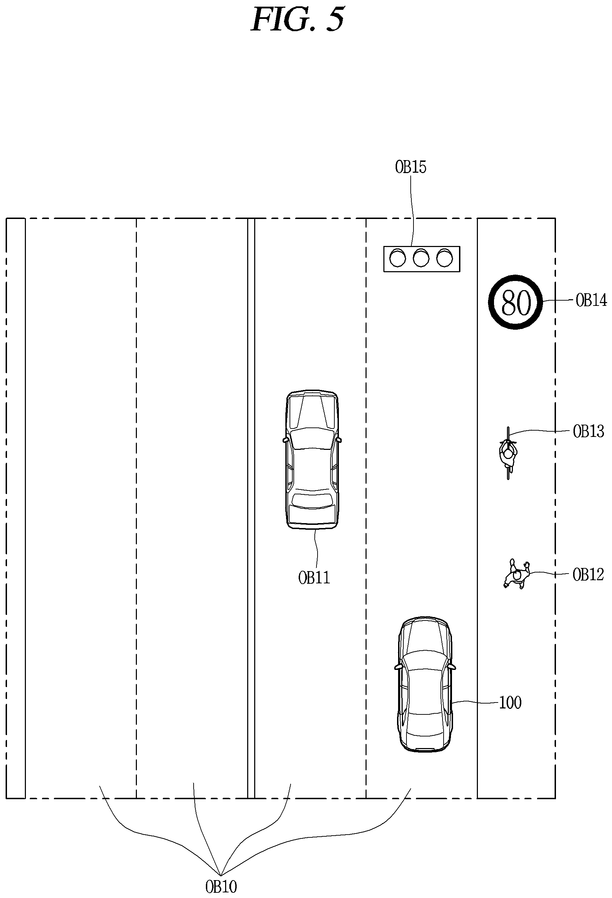

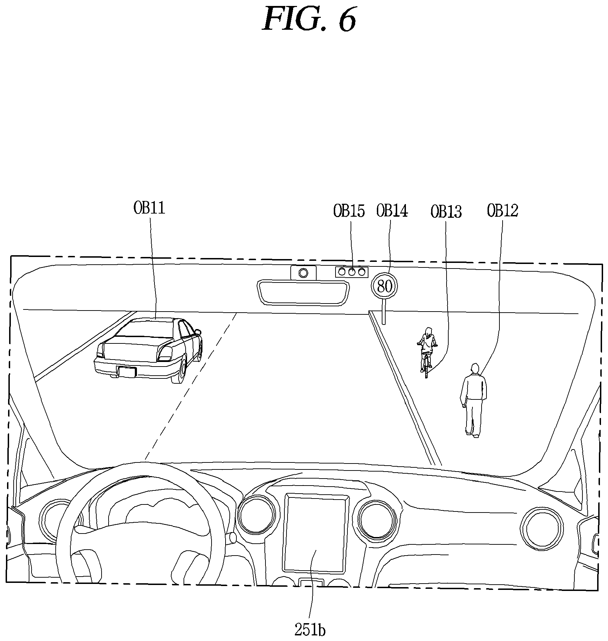

FIGS. 5 and 6 are diagrams illustrating various objects related to driving (traveling) of the vehicle.

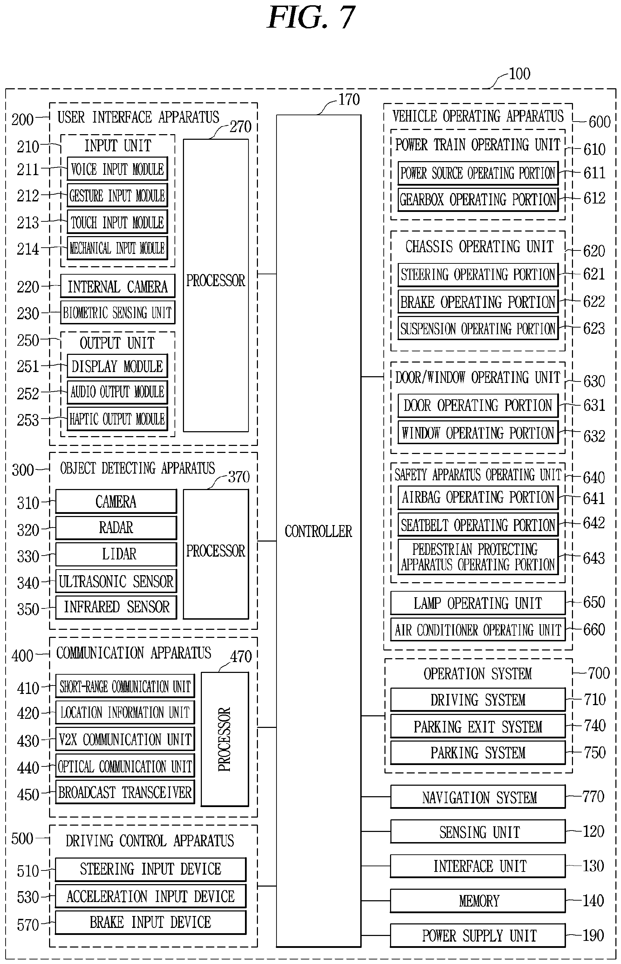

FIG. 7 is a block diagram illustrating the vehicle in accordance with the implementation. FIG. 7 is a block diagram illustrating the vehicle according to the implementation.

As illustrated in FIG. 1 to 7, a vehicle 100 may include wheels turning by a driving force, and a steering input device 510 for adjusting a driving (traveling, ongoing, moving) direction of the vehicle 100.

The vehicle 100 may be an autonomous vehicle. The vehicle 100 may be switched into an autonomous mode or a manual mode based on a user input. For example, the vehicle may be switched from the manual mode into the autonomous mode or from the autonomous mode into the manual mode based on a user input received through a user interface apparatus (hereinafter, referred to as 'user terminal') 200.

The vehicle 100 may be switched into the autonomous mode or the manual mode based on driving environment information. The driving environment information may be generated based on object information provided from an object detecting apparatus 300. For example, the vehicle 100 may be switched from the manual mode into the autonomous mode or from the autonomous module into the manual mode based on driving environment information generated in the object detecting apparatus 300. In an example, the vehicle 100 may be switched from the manual mode into the autonomous mode or from the autonomous module into the manual mode based on driving environment information received through a communication apparatus 400.

The vehicle 100 may be switched from the manual mode into the autonomous mode or from the autonomous module into the manual mode based on information, data or signal provided from an external device.

When the vehicle 100 is driven in the autonomous mode, the autonomous vehicle 100 may be driven based on an operation system 700. For example, the autonomous vehicle 100 may be driven based on information, data or signal generated in a driving system 710, a parking exit system 740 and a parking system 750.

When the vehicle 100 is driven in the manual mode, the autonomous vehicle 100 may receive a user input for driving through a driving control apparatus 500. The vehicle 100 may be driven based on the user input received through the driving control apparatus 500.

An overall length refers to a length from a front end to a rear end of the vehicle 100, a width refers to a width of the vehicle 100, and a height refers to a length from a bottom of a wheel to a roof. In the following description, an overall-length direction L may refer to a direction which is a criterion for measuring the overall length of the vehicle 100, a width direction W may refer to a direction that is a criterion for measuring a width of the vehicle 100, and a height direction H may refer to a direction that is a criterion for measuring a height of the vehicle 100

As illustrated in FIG. 7, the vehicle 100 may include a user interface apparatus (hereinafter, referred to as 'user terminal') 200, an object detecting apparatus 300, a communication apparatus 400, a driving control apparatus 500, a vehicle operating apparatus 600, an operation system 700, a navigation system 770, a sensing unit 120, an interface unit 130, a memory 140, a controller 170 and a power supply unit 190.

In some implementations, the vehicle 100 may include more components in addition to components to be explained in this specification or may not include some of those components to be explained in this specification.

The user interface apparatus 200 is an apparatus for communication between the vehicle 100 and a user. The user interface apparatus 200 may receive a user input and provide information generated in the vehicle 100 to the user. The vehicle 100 may implement user interfaces (Uls) or user experiences (UXs) through the user interface apparatus (hereinafter, referred to as 'user terminal') 200.

The user interface apparatus 200 may include an input unit 210, an internal camera 220, a biometric sensing unit 230, an output unit 250 and at least one processor, such as processor 270. In some implementations, the user interface apparatus 200 may include more components in addition to components to be explained in this specification or may not include some of those components to be explained in this specification.

The input unit 210 may allow the user to input information. Data collected in the input unit 210 may be analyzed by the processor 270 and processed as a user's control command.

The input unit 210 may be disposed inside the vehicle. For example, the input unit 210 may be disposed on one area of a steering wheel, one area of an instrument panel, one area of a seat, one area of each pillar, one area of a door, one area of a center console, one area of a headlining, one area of a sun visor, one area of a wind shield, one area of a window or the like.

The input unit 210 may include a voice input module 211, a gesture input module 212, a touch input module 213, and a mechanical input module 214.

The audio input module 211 may convert a user's voice input into an electric signal. The converted electric signal may be provided to the processor 270 or the controller 170. The voice input module 211 may include at least one microphone.

The gesture input module 212 may convert a user's gesture input into an electric signal. The converted electric signal may be provided to the processor 270 or the controller 170.

The gesture input module 212 may include at least one of an infrared sensor and an image sensor for detecting the user's gesture input. According to embodiments, the gesture input module 212 may detect a user's three-dimensional (3D) gesture input. To this end, the gesture input module 212 may include a light emitting diode outputting a plurality of infrared rays or a plurality of image sensors.

The gesture input module 212 may detect the user's 3D gesture input by a time of flight (TOF) method, a structured light method or a disparity method.

The touch input module 213 may convert the user's touch input into an electric signal. The converted electric signal may be provided to the processor 270 or the controller 170.

The touch input module 213 may include a touch sensor for detecting the user's touch input. According to an embodiment, the touch input module 213 may be integrated with the display module 251 so as to implement a touch screen. The touch screen may provide an input interface and an output interface between the vehicle 100 and the user.

The mechanical input module 214 may include at least one of a button, a dome switch, a jog wheel and a jog switch. An electric signal generated by the mechanical input module 214 may be provided to the processor 270 or the controller 170. The mechanical input module 214 may be arranged on a steering wheel, a center fascia, a center console, a cockpit module, a door and the like.

The internal camera 220 may acquire an internal image of the vehicle. The processor 270 may detect a user's state based on the internal image of the vehicle. The processor 270 may acquire information related to the user's gaze from the internal image of the vehicle. The processor 270 may detect a user gesture from the internal image of the vehicle.

The biometric sensing unit 230 may acquire the user's biometric information. The biometric sensing module 230 may include a sensor for detecting the user's biometric information and acquire fingerprint information and heart rate information regarding the user using the sensor. The biometric information may be used for user authentication.

The output unit 250 may generate an output related to a visual, audible or tactile signal. The output unit 250 may include at least one of a display module 251, an audio output module 252 and a haptic output module 253.

The display module 251 may output graphic objects corresponding to various types of information. The display module 251 may include at least one of a liquid crystal display (LCD), a thin film transistor-LCD (TFT LCD), an organic light-emitting diode (OLED), a flexible display, a three-dimensional (3D) display and an e-ink display.

The display module 251 may be inter-layered or integrated with a touch input module 213 to implement a touch screen.

The display module 251 may be implemented as a head up display (HUD). When the display module 251 is implemented as the HUD, the display module 251 may be provided with a projecting module so as to output information through an image which is projected on a windshield or a window.

The display module 251 may include a transparent display. The transparent display may be attached to the windshield or the window. The transparent display may have a predetermined degree of transparency and output a predetermined screen thereon. The transparent display may include at least one of a thin film electroluminescent (TFEL), a transparent OLED, a transparent LCD, a transmissive transparent display and a transparent LED display. The transparent display may have adjustable transparency.

Meanwhile, the user interface apparatus 200 may include a plurality of display modules 251a to 251g.

The display module 251 may be disposed on one area of a steering wheel, one area 521a, 251b, 251e of an instrument panel, one area 251d of a seat, one area 251f of each pillar, one area 251g of a door, one area of a center console, one area of a headlining or one area of a sun visor, or implemented on one area 251c of a windshield or one area 251h of a window.

The audio output module 252 may convert an electric signal provided from the processor 270 or the controller 170 into an audio signal for output. To this end, the audio output module 252 may include at least one speaker.

The haptic output module 253 generates a tactile output. For example, the haptic output module 253 may vibrate the steering wheel, a safety belt, a seat 110FL, 110FR, 110RL, 110RR such that the user can recognize such output.

The processor (hereinafter, referred to as 'controller') 270 may control an overall operation of each unit of the user interface apparatus 200. In some implementations, the user interface apparatus 200 may include a plurality of processors 270 or may not include any processor 270.

When the processor 270 is not included in the user interface apparatus 200, the user interface apparatus 200 may operate according to a control of a processor of another apparatus within the vehicle 100 or the controller 170.

Meanwhile, the user interface apparatus 200 may be called as a display apparatus for vehicle. The user interface apparatus 200 may operate according to the control of the controller 170.

The object detecting apparatus 300 is an apparatus for detecting an object located at outside of the vehicle 100. The object may be a variety of objects associated with driving (operation) of the vehicle 100. Referring to FIGS. 5 and 6, an object O may include a traffic lane OB10, another vehicle OB11, a pedestrian OB12, a two-wheeled vehicle OB13, traffic signals OB14 and OB15, light, a road, a structure, a speed hump, a terrain, an animal and the like.

The lane OB10 may be a driving lane, a lane next to the driving lane or a lane on which another vehicle comes in an opposite direction to the vehicle 100. The lanes OB10 may include left and right lines defining a lane.

The another vehicle OB11 may be a vehicle which is moving around the vehicle 100. The another vehicle OB11 may be a vehicle located within a predetermined distance from the vehicle 100. For example, the another vehicle OB11 may be a vehicle which moves before or after the vehicle 100.

The pedestrian OB12 may be a person located near the vehicle 100. The pedestrian OB12 may be a person located within a predetermined distance from the vehicle 100. For example, the pedestrian OB12 may be a person located on a sidewalk or roadway.

The two-wheeled vehicle OB12 may refer to a vehicle (transportation facility) that is located near the vehicle 100 and moves using two wheels. The two-wheeled vehicle OB12 may be a vehicle that is located within a predetermined distance from the vehicle 100 and has two wheels. For example, the two-wheeled vehicle OB13 may be a motorcycle or a bicycle that is located on a sidewalk or roadway.

The traffic signals may include a traffic light OB15, a traffic sign OB14 and a pattern or text drawn on a road surface.

The light may be light emitted from a lamp provided on another vehicle. The light may be light generated from a streetlamp. The light may be solar light.

The road may include a road surface, a curve, an upward slope, a downward slope and the like.

The structure may be an object that is located near a road and fixed on the ground. For example, the structure may include a streetlamp, a roadside tree, a building, an electric pole, a traffic light, a bridge and the like.

The terrain may include a mountain, a hill and the like.

Meanwhile, objects may be classified into a moving object and a fixed object. For example, the moving object may be a concept including another vehicle and a pedestrian. The fixed object may be, for example, a traffic signal, a road, or a structure.

The object detecting apparatus 300 may include a camera 310, a radar 320, a LiDAR 330, an ultrasonic sensor 340, an infrared sensor 350, and a processor 370.

In some implementations, the object detecting apparatus 300 may further include other components in addition to the components described, or may not include some of the components described.

The camera 310 may be located on an appropriate portion outside the vehicle to acquire an external image of the vehicle. The camera 310 may be a mono camera, a stereo camera 310a, an around view monitoring (AVM) camera 310b or a 360-degree camera.

For example, the camera 310 may be disposed adjacent to a front windshield within the vehicle to acquire a front image of the vehicle. Or, the camera 310 may be disposed adjacent to a front bumper or a radiator grill.

For example, the camera 310 may be disposed adjacent to a rear glass within the vehicle to acquire a rear image of the vehicle. Or, the camera 310 may be disposed adjacent to a rear bumper, a trunk or a tail gate.

For example, the camera 310 may be disposed adjacent to at least one of side windows within the vehicle to acquire a side image of the vehicle. Or, the camera 310 may be disposed adjacent to a side mirror, a fender or a door.

The camera 310 may provide an acquired image to the processor 370.

The radar 320 may include electric wave transmitting and receiving portions. The radar 320 may be implemented as a pulse radar or a continuous wave radar according to a principle of emitting electric waves. The radar 320 may be implemented in a frequency modulated continuous wave (FMCW) manner or a frequency shift Keyong (FSK) manner according to a signal waveform, among the continuous wave radar methods.

The radar 320 may detect an object in a time of flight (TOF) manner or a phase-shift manner through the medium of the electric wave, and detect a position of the detected object, a distance from the detected object and a relative speed with the detected object.

The radar 320 may be disposed on an appropriate position outside the vehicle for detecting an object which is located at a front, rear or side of the vehicle.

The LiDAR 330 may include laser transmitting and receiving portions. The LiDAR 330 may be implemented in a time of flight (TOF) manner or a phase-shift manner.

The LiDAR 330 may be implemented as a drive type or a non-drive type.

For the drive type, the LiDAR 330 may be rotated by a motor and detect object near the vehicle 100.

For the non-drive type, the LiDAR 330 may detect, through light steering, objects which are located within a predetermined range based on the vehicle 100. The vehicle 100 may include a plurality of non-drive type LiDARs 330.

The LiDAR 330 may detect an object in a TOP manner or a phase-shift manner through the medium of a laser beam, and detect a position of the detected object, a distance from the detected object and a relative speed with the detected object.

The LiDAR 330 may be disposed on an appropriate position outside the vehicle for detecting an object located at the front, rear or side of the vehicle.

The ultrasonic sensor 340 may include ultrasonic wave transmitting and receiving portions. The ultrasonic sensor 340 may detect an object based on an ultrasonic wave, and detect a position of the detected object, a distance from the detected object and a relative speed with the detected object.

The ultrasonic sensor 340 may be disposed on an appropriate position outside the vehicle for detecting an object located at the front, rear or side of the vehicle.

The infrared sensor 350 may include infrared light transmitting and receiving portions. The infrared sensor 340 may detect an object based on infrared light, and detect a position of the detected object, a distance from the detected object and a relative speed with the detected object.

The infrared sensor 350 may be disposed on an appropriate position outside the vehicle for detecting an object located at the front, rear or side of the vehicle.

The processor 370 may control an overall operation of each unit of the object detecting apparatus 300.

The processor 370 may detect an object based on an acquired image, and track the object. The processor 370 may execute operations, such as a calculation of a distance from the object, a calculation of a relative speed with the object and the like, through an image processing algorithm.

The processor 370 may detect an object based on a reflected electromagnetic wave which an emitted electromagnetic wave is reflected from the object, and track the object. The processor 370 may execute operations, such as a calculation of a distance from the object, a calculation of a relative speed with the object and the like, based on the electromagnetic wave.

The processor 370 may detect an object based on a reflected laser beam which an emitted laser beam is reflected from the object, and track the object. The processor 370 may execute operations, such as a calculation of a distance from the object, a calculation of a relative speed with the object and the like, based on the laser beam.

The processor 370 may detect an object based on a reflected ultrasonic wave which an emitted ultrasonic wave is reflected from the object, and track the object. The processor 370 may execute operations, such as a calculation of a distance from the object, a calculation of a relative speed with the object and the like, based on the ultrasonic wave.

The processor 370 may detect an object based on reflected infrared light which emitted infrared light is reflected from the object, and track the object. The processor 370 may execute operations, such as a calculation of a distance from the object, a calculation of a relative speed with the object and the like, based on the infrared light.

In some implementations, the object detecting apparatus 300 may include a plurality of processors 370 or may not include any processor 370. For example, each of the camera 310, the radar 320, the LiDAR 330, the ultrasonic sensor 340 and the infrared sensor 350 may include the processor in an individual manner.

When the processor 370 is not included in the object detecting apparatus 300, the object detecting apparatus 300 may operate according to the control of a processor of an apparatus within the vehicle 100 or the controller 170.

The object detecting apparatus 400 may operate according to the control of the controller 170.

The communication apparatus 400 is an apparatus for performing communication with an external device. Here, the external device may be another vehicle, a mobile terminal or a server.

The communication apparatus 400 may perform the communication by including at least one of a transmitting antenna, a receiving antenna, and radio frequency (RF) circuit and RF device for implementing various communication protocols.

The communication apparatus 400 may include a short-range communication unit 410, a location information unit 420, a V2X communication unit 430, an optical communication unit 440, a broadcast transceiver 450 and a processor 470.

According to an embodiment, the communication apparatus 400 may further include other components in addition to the components described, or may not include some of the components described.

The short-range communication unit 410 is a unit for facilitating short-range communications. Suitable technologies for implementing such short-range communications include BLUETOOTH, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like.

The short-range communication unit 410 may construct short-range area networks to perform short-range communication between the vehicle 100 and at least one external device.

The location information unit 420 is a unit for acquiring position information. For example, the location information unit 420 may include a Global Positioning System (GPS) module or a Differential Global Positioning System (DGPS) module.

The V2X communication unit 430 is a unit for performing wireless communications with a server (Vehicle to Infra; V2I), another vehicle (Vehicle to Vehicle; V2V), or a pedestrian (Vehicle to Pedestrian; V2P). The V2X communication unit 430 may include an RF circuit implementing a communication protocol with the infra (V2I), a communication protocol between the vehicles (V2V) and a communication protocol with a pedestrian (V2P).

The optical communication unit 440 is a unit for performing communication with an external device through the medium of light. The optical communication unit 440 may include a light-emitting diode for converting an electric signal into an optical signal and sending the optical signal to the exterior, and a photodiode for converting the received optical signal into an electric signal.

According to an embodiment, the light-emitting diode may be integrated with lamps provided on the vehicle 100.

The broadcast transceiver 450 is a unit for receiving a broadcast signal from an external broadcast managing entity or transmitting a broadcast signal to the broadcast managing entity via a broadcast channel. The broadcast channel may include a satellite channel, a terrestrial channel, or both. The broadcast signal may include a TV broadcast signal, a radio broadcast signal and a data broadcast signal.

The processor 470 may control an overall operation of each unit of the communication apparatus 400.

According to an embodiment, the communication apparatus 400 may include a plurality of processors 470 or may not include any processor 470.

When the processor 470 is not included in the communication apparatus 400, the communication apparatus 400 may operate according to the control of a processor of another device within the vehicle 100 or the controller 170.

Meanwhile, the communication apparatus 400 may implement a display apparatus for a vehicle together with the user interface apparatus 200. In this instance, the display apparatus for the vehicle may be referred to as a telematics apparatus or an Audio Video Navigation (AVN) apparatus.

The communication apparatus 400 may operate according to the control of the controller 170.

The driving control apparatus 500 is an apparatus for receiving a user input for driving.

In a manual mode, the vehicle 100 may be operated based on a signal provided by the driving control apparatus 500.

The driving control apparatus 500 may include a steering input device 510, an acceleration input device 530 and a brake input device 570.

The steering input device 510 may receive an input regarding a driving (ongoing) direction of the vehicle 100 from the user. The steering input device 510 may be configured in the form of a wheel allowing a steering input in a rotating manner. In some implementations, the steering input device may also be configured in a shape of a touch screen, a touch pad or a button.

The acceleration input device 530 may receive an input for accelerating the vehicle 100 from the user. The brake input device 570 may receive an input for braking the vehicle 100 from the user. Each of the acceleration input device 530 and the brake input device 570 is preferably configured in the form of a pedal. In some implementations, the acceleration input device or the brake input device may also be configured in a shape of a touch screen, a touch pad or a button.

The driving control apparatus 500 may operate according to the control of the controller 170.

The vehicle operating apparatus 600 is an apparatus for electrically controlling operations of various devices within the vehicle 100.

The vehicle operating apparatus 600 may include a power train operating unit 610, a chassis operating unit 620, a door/window operating unit 630, a safety apparatus operating unit 640, a lamp operating unit 650, and an air-conditioner operating unit 660.

According to some embodiments, the vehicle operating apparatus 600 may further include other components in addition to the components described, or may not include some of the components described.

In some examples, the vehicle operating apparatus 600 may include a processor. Each unit of the vehicle operating apparatus 600 may individually include a processor.

The power train operating unit 610 may control an operation of a power train device.

The power train operating unit 610 may include a power source operating portion 611 and a gearbox operating portion 612.

The power source operating portion 611 may perform a control for a power source of the vehicle 100.

For example, upon using a fossil fuel-based engine as the power source, the power source operating portion 611 may perform an electronic control for the engine. Accordingly, an output torque and the like of the engine can be controlled. The power source operating portion 611 may adjust the engine output torque according to the control of the controller 170.

For example, upon using an electric energy-based motor as the power source, the power source operating portion 611 may perform a control for the motor. The power source operating portion 611 may adjust a rotating speed, a torque and the like of the motor according to the control of the controller 170.

The gearbox operating portion 612 may perform a control for a gearbox. The gearbox operating portion 612 may adjust a state of the gearbox. The gearbox operating portion 612 may change the state of the gearbox into drive (forward) (D), reverse (R), neutral (N) or parking (P).

In some examples, when an engine is the power source, the gearbox operating portion 612 may adjust a locked state of a gear in the drive (D) state.

The chassis operating unit 620 may control an operation of a chassis device. The chassis operating unit 620 may include a steering operating portion 621, a brake operating portion 622 and a suspension operating portion 623.

The steering operating portion 621 may perform an electronic control for a steering apparatus within the vehicle 100. The steering operating portion 621 may change a driving direction of the vehicle.

The brake operating portion 622 may perform an electronic control for a brake apparatus within the vehicle 100. For example, the brake operating portion 622 may control an operation of brakes provided at wheels to reduce speed of the vehicle 100.

Meanwhile, the brake operating portion 622 may individually control each of a plurality of brakes. The brake operating portion 622 may differently control braking force applied to each of a plurality of wheels.

The suspension operating portion 623 may perform an electronic control for a suspension apparatus within the vehicle 100. For example, the suspension operating portion 623 may control the suspension apparatus to reduce vibration of the vehicle 100 when a bump is present on a road. Meanwhile, the suspension operating portion 623 may individually control each of a plurality of suspensions.

The door/window operating unit 630 may perform an electronic control for a door apparatus or a window apparatus within the vehicle 100.

The door/window operating unit 630 may include a door operating portion 631 and a window operating portion 632.

The door operating portion 631 may perform the control for the door apparatus. The door operating portion 631 may control opening or closing of a plurality of doors of the vehicle 100. The door operating portion 631 may control opening or closing of a trunk or a tail gate. The door operating portion 631 may control opening or closing of a sunroof.

The window operating portion 632 may perform the electronic control for the window apparatus. The window operating portion 632 may control opening or closing of a plurality of windows of the vehicle 100.

The safety apparatus operating unit 640 may perform an electronic control for various safety apparatuses within the vehicle 100.

The safety apparatus operating unit 640 may include an airbag operating portion 641, a seatbelt operating portion 642 and a pedestrian protecting apparatus operating portion 643.

The airbag operating portion 641 may perform an electronic control for an airbag apparatus within the vehicle 100. For example, the airbag operating portion 641 may control the airbag to be deployed upon a detection of a risk.

The seatbelt operating portion 642 may perform an electronic control for a seatbelt apparatus within the vehicle 100. For example, the seatbelt operating portion 642 may control passengers to be motionlessly seated in seats 110FL, 110FR, 110RL, 110RR using seatbelts upon a detection of a risk.

The pedestrian protecting apparatus operating portion 643 may perform an electronic control for a hood lift and a pedestrian airbag. For example, the pedestrian protecting apparatus operating portion 643 may control the hood lift and the pedestrian airbag to be open up upon detecting pedestrian collision.

The lamp operating unit 650 may perform an electronic control for various lamp apparatuses within the vehicle 100.

The air-conditioner operating unit 660 may perform an electronic control for an air conditioner within the vehicle 100. For example, the air-conditioner operating unit 660 may control the air conditioner to supply cold air into the vehicle when internal temperature of the vehicle is high.

The vehicle operating apparatus 600 may include a processor. Each unit of the vehicle operating apparatus 600 may individually include a processor.

The vehicle operating apparatus 600 may operate according to the control of the controller 170.

The operation system 700 is a system that controls various driving modes of the vehicle 100. The operation system 700 may operate in an autonomous driving mode.

The operation system 700 may include a driving system 710, a parking exit system 740 and a parking system 750.

According to embodiments, the operation system 700 may further include other components in addition to components to be described, or may not include some of the components to be described.

In some examples, the operation system 700 may include at least one processor. Each unit of the operation system 700 may individually include a processor.

In some implementations, the operation system may be implemented by the controller 170 when it is implemented in a software configuration.

In some implementations, the operation system 700 may be implemented by at least one of the user interface apparatus 200, the object detecting apparatus 300, the communication apparatus 400, the vehicle operating apparatus 600 and the controller 170.

The driving system 710 may perform driving of the vehicle 100.

The driving system 710 may receive navigation information from a navigation system 770, transmit a control signal to the vehicle operating apparatus 600, and perform driving of the vehicle 100. The driving system 710 may receive object information from the object detecting apparatus 300, transmit a control signal to the vehicle operating apparatus 600 and perform driving of the vehicle 100. The driving system 710 may receive a signal from an external device through the communication apparatus 400, transmit a control signal to the vehicle operating apparatus 600, and perform driving of the vehicle 100.

The parking exit system 740 may perform an exit of the vehicle 100 from a parking lot.

The parking exit system 740 may receive navigation information from the navigation system 770, transmit a control signal to the vehicle operating apparatus 600, and perform the exit of the vehicle 100 from the parking lot. The parking exit system 740 may receive object information from the object detecting apparatus 300, transmit a control signal to the vehicle operating apparatus 600 and perform the exit of the vehicle 100 from the parking lot. The parking exit system 740 may receive a signal from an external device through the communication apparatus 400, transmit a control signal to the vehicle operating apparatus 600, and perform the exit of the vehicle 100 from the parking lot.

The parking system 750 may perform parking of the vehicle 100.

The parking system 750 may receive navigation information from the navigation system 770, transmit a control signal to the vehicle operating apparatus 600, and park the vehicle 100. The parking system 750 may receive object information from the object detecting apparatus 300, transmit a control signal to the vehicle operating apparatus 600 and park the vehicle 100. The parking system 750 may receive a signal from an external device through the communication apparatus 400, transmit a control signal to the vehicle operating apparatus 600, and park the vehicle 100.

The navigation system 770 may provide navigation information. The navigation information may include at least one of map information, information regarding a set destination, path information according to the set destination, information regarding various objects on a path, lane information and current location information of the vehicle.

The navigation system 770 may include a memory and a processor. The memory may store the navigation information. The processor may control an operation of the navigation system 770.

According to embodiments, the navigation system 770 may update prestored information by receiving information from an external device through the communication apparatus 400.

In some implementations, the navigation system 770 may be classified as a sub component of the user interface apparatus 200.

The sensing unit 120 may sense a status of the vehicle. The sensing unit 120 may include a posture sensor (e.g., a yaw sensor, a roll sensor, a pitch sensor, etc.), a collision sensor, a wheel sensor, a speed sensor, a tilt sensor, a weight-detecting sensor, a heading sensor, a gyro sensor, a position module, a vehicle forward/backward movement sensor, a battery sensor, a fuel sensor, a tire sensor, a steering sensor by a turn of a handle, a vehicle internal temperature sensor, a vehicle internal humidity sensor, an ultrasonic sensor, an illumination sensor, an accelerator position sensor, a brake pedal position sensor, and the like.

The sensing unit 120 may acquire sensing signals with respect to vehicle-related information, such as a posture, a collision, an orientation, a position (GPS information), an angle, a speed, an acceleration, a tilt, a forward/backward movement, a battery, a fuel, tires, lamps, internal temperature, internal humidity, a rotated angle of a steering wheel, external illumination, pressure applied to an accelerator, pressure applied to a brake pedal and the like.

The sensing unit 120 may further include an accelerator sensor, a pressure sensor, an engine speed sensor, an air flow sensor (AFS), an air temperature sensor (ATS), a water temperature sensor (WTS), a throttle position sensor (TPS), a TDC sensor, a crank angle sensor (CAS), and the like.

The interface unit 130 may serve as a path allowing the vehicle 100 to interface with various types of external devices connected thereto. For example, the interface unit 130 may be provided with a port connectable with a mobile terminal, and connected to the mobile terminal through the port. In this instance, the interface unit 130 may exchange data with the mobile terminal.

In some examples, the interface unit 130 may serve as a path for supplying electric energy to the connected mobile terminal. When the mobile terminal is electrically connected to the interface unit 130, the interface unit 130 supplies electric energy supplied from a power supply unit 190 to the mobile terminal according to the control of the controller 170.

The memory 140 is electrically connected to the controller 170. The memory 140 may store basic data for units, control data for controlling operations of units and input/output data. The memory 140 may be a variety of storage devices, such as ROM, RAM, EPROM, a flash drive, a hard drive and the like in a hardware configuration. The memory 140 may store various data for overall operations of the vehicle 100, such as programs for processing or controlling the controller 170.

In some implementations, the memory 140 may be integrated with the controller 170 or implemented as a sub component of the controller 170.

The controller 170 may control an overall operation of each unit of the vehicle 100. The controller 170 may be referred to as an Electronic Control Unit (ECU).

The power supply unit 190 may supply power required for an operation of each component according to the control of the controller 170. Specifically, the power supply unit 190 may receive power supplied from an internal battery of the vehicle, and the like.

At least one processor and the controller 170 included in the vehicle 100 may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro controllers, microprocessors, and electric units performing other functions.

Meanwhile, the digital signage platform providing apparatus according to the present disclosure may communicate with a user interface device (or hereinafter referred to as "user terminal") 200 or a navigation system 770 of a vehicle 100 to provide a platform and/or related data for providing AR digital signage to a building in a driving image on a floor-by-floor basis.

In the present disclosure, AR digital signage refers to providing multimedia information displayed on a building or related area in a driving image using augmented reality (AR) technology and is obtained by implementing a function such as an outdoor signboard with AR technology.

As disclosed herein, the displaying of AR digital signage in a building in which a plurality of pieces of POI information are present on a floor-by-floor basis refers to determining floor number information matched to the POI information and displaying content information corresponding to each floor of the building on a floor-by-floor basis using AR digital signage when content information (e.g., advertisement information, brand information, news information, etc.) related to the plurality of pieces of POI information is present.

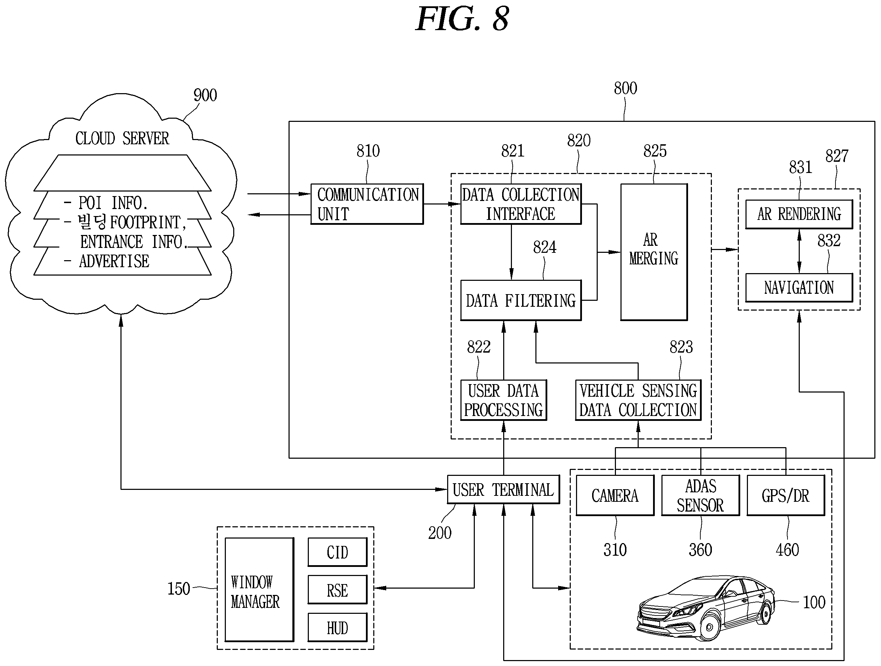

FIG. 8 is a block diagram showing that a digital signage platform providing apparatus 800 is communicatively connected to a user terminal 200, a vehicle 100, and a cloud server 900.

The digital signage platform providing apparatus 800 according to the present disclosure may be implemented as a portion of a vehicular electronic device or system of the vehicle 100 or may be included in the cloud server. Also, the digital signage platform providing apparatus 800 may be implemented in the form of a program implemented by a processor of the user terminal 200 linked with the vehicle 100.

The digital signage platform providing apparatus 800 may communicate with the vehicle 100 to collect sensing data through a sensor provided in the vehicle 100 and may collect and process user data through the user terminal 200 linked with the vehicle 100. The digital signage platform providing apparatus 800 may filter and process data collected in communication with the vehicle 100 and the user terminal 200 and information collected through the cloud server 900, perform AR merging, and make a rendering request to generate AR digital signage.

The digital signage platform providing apparatus 800 may transmit a result for the rendering request to the user terminal 200 and may request continuous image correction for performing mapping into a driving image displayed on a windshield, a dashboard, a head-up display (HUD), etc. through the user terminal 200. Here, the user terminal 200 may be implemented as a user interface device or a navigation system 770 implemented as a part of the system of the vehicle 100 as described above.

The digital signage platform providing apparatus 800 is communicatively connected to the cloud server 900 through the communication module 810. A plurality of cloud servers 900 may communicate with the digital signage platform providing apparatus 800.

The digital signage platform providing apparatus 800 may communicate with the cloud server 900 to receive map information such as 2D or 3D map information, building footprint information, entrance information, and floor number information including POI information.

Also, the digital signage platform providing apparatus 800 may communicate with the cloud server 900 to receive advertisement information about a POI (e.g., advertisement information collected in operative association with databases such as NoSQL DB, Mongo, etc. Also, the digital signage platform providing apparatus 800 may communicate with the cloud server 900 to receive real-time traffic information.

The digital signage platform providing apparatus 800 may collect and store the map information, advertisement information, and traffic information received from the cloud server 900 in a data collection interface 821. The collected and stored information is delivered for data filtering (824).

Also, the digital signage platform providing apparatus 800 receives vehicle sensing data from a camera 310, an advanced driver assistance systems (ADAS) sensor 360, and a global positioning system (GPS)/dead reckoning (DR) unit 460 provided in the vehicle 100 through a communication unit (not shown) or a user interface (not shown). Here, the vehicle sensing data may include, for example, a driving image acquired through the camera 310 provided in the vehicle, a driving direction and speed, a distance from a lane, and the like acquired through the ADAS sensor 360, and location data of the vehicle acquired through a vehicle navigation system such as the GPS/DR unit 460. The received vehicle sensing data is collected and stored through vehicle sensing data collection (823), and the stored information is delivered for the data filtering (824).

Also, the digital signage platform providing apparatus 800 may receive a request corresponding to a user input (e.g., a request for AR signage provision, a request for route guidance, etc.) from the user terminal 200 that is embedded in or linked with the vehicle 100. The received user input is processed through user data processing (822) and delivered for the data filtering (824).

In the data filtering (824) of the digital signage platform providing apparatus 800, information received from the cloud server 900, input information transmitted by the user terminal 200, and vehicle sensing data received from the vehicle 100 are filtered and processed so that only optimal data to be shown in a driving image remains.

Specifically, the digital signage platform providing apparatus 800 detects a building area including a plurality of pieces of POI information, calculates spatial coordinates of the building area, and acquires floor number information for each of the plurality of pieces of POI information on the basis of the map information received from the cloud server 900. Then, the digital signage platform providing apparatus 800 may calculate the reference point of the building area for displaying content information related to the plurality of pieces of POI information on the basis of the sensing data of the vehicle obtained by the vehicle sensing data collection (823) and the spatial coordinates and the floor number information of the building area.

The calculation of the reference point is a process for providing a realistic sense as if a signage signboard is displayed on an actual building by matching the viewpoint of an actual driving road or the above-mentioned driving image to the viewpoint of a screen in which the content information related to the plurality of pieces of POI information is to be rendered.

Next, the digital signage platform providing apparatus 800 performs a rendering request for displaying AR digital signage corresponding to the content information related to the plurality of pieces of POI information in a display area determined based on the calculated reference point.

To this end, the information or data filtered and processed by the data filtering (824) is AR-merged with map information collected through the cloud server 900 continuously and in real time (825). The digital signage platform providing apparatus 800 provides the AR-merged (825) information or data to an AR engine to request AR rendering.

The AR engine 830 may be embedded in the digital signage platform providing apparatus 800 as shown in FIG. 8. Alternatively, in other embodiments, the AR engine 830 may be implemented by the user terminal 200, the user interface device 200 (see FIG. 7) of the vehicle shown in FIG. 7, or a processor included in the navigation system 770 or may be implemented by a separate terminal, apparatus, or cloud server.

In response to the AR rendering request, the AR engine 830 may perform AR rendering (831) on a route of navigation (832) (or 2D or 3D map information on the basis of the AR-merged (825) information or data in real time. Thus, the actual driving road and the viewpoint of the screen in which the AR digital signage is to be rendered are matched with each other.

The result of rendering through the AR engine 830 may be transmitted to the user terminal 200. Based on the rendering result, the user terminal 200 may map the AR digital signage to corresponding floors of the building in the driving image displayed on the display of the user terminal 200 or a display device of the vehicle 100, for example, a center information display (CID), a cluster, a head-up display (HUD), a room mirror display, a rear-seat entertainment (RSE) system, a vehicle windshield/dashboard, or the like and output the mapped AR digital signage on a floor-by-floor basis.

In this case, a driving image captured or reflected through a camera sensor provided in the vehicle 100 is output to the display of the user terminal 200 or a display or LCD screen provided in the CID, HUD, or RSE of the vehicle 100, and AR digital signage is mapped to the corresponding driving image. On the other hand, a vehicle display device such as an AR navigation system maps AR digital signage to the vehicle windshield or dashboard by direct projection through a laser sensor or the like provided in the vehicle 100.

Therefore, in the present disclosure, a "driving image" includes an image captured through a camera sensor (or smart glasses including such a function, an image reflected on the LCD screen through a camera sensor, an actual space image displayed on a windshield or dashboard into which AR digital signage is directed projected, digitally-twinned 3D image, and the like.

Meanwhile, the user terminal 200 may transmit the mapping result to the digital signage platform providing apparatus 800 such that the display area in which the image of the AR digital signage is mapped and the display area of the building in the driving image or the actual driving road are matched with each other and may receive an image correction request from the digital signage platform providing apparatus 800 continuously and in real time.

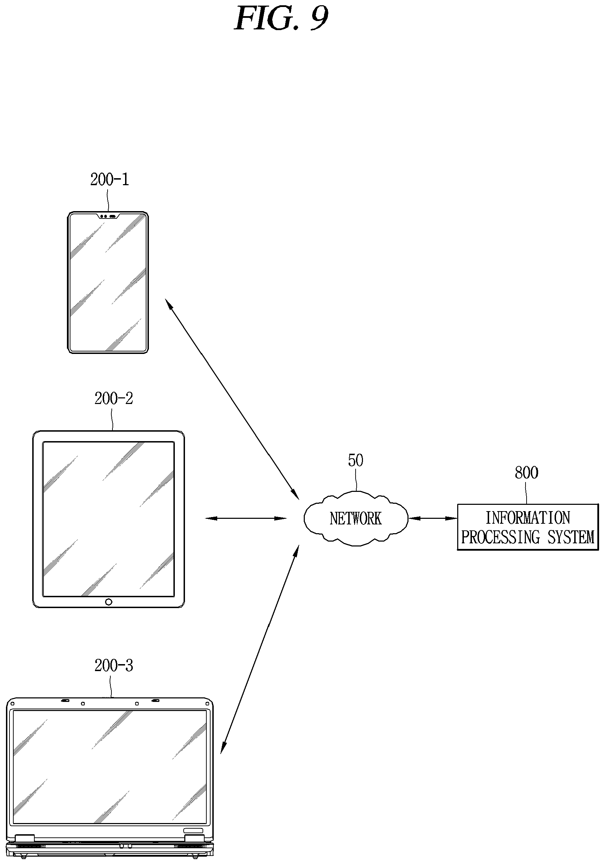

FIG. 9 is a block diagram showing that an information processing system related to an embodiment of the present disclosure is communicatively connected to a plurality of user terminals.

FIG. 9 is a schematic diagram illustrating a configuration in which an information processing system 800 according to an embodiment of the present disclosure is communicatively connected to a plurality of user terminals 200_1, 200_2, and 200_3. Here, the information processing system 800 may refer to a system capable of providing a digital signage platform according to the present disclosure. Also, the plurality of user terminals 200_1, 200_2, and 200_3 may be referred to as a device such as a user terminal embedded in, provided in, or connected to the vehicle 100.

As shown, the plurality of user terminals 200_1, 200_2, and 200_3 may be connected to an information processing system capable of providing an AR rendering request result for generating AR digital signage over a network 50. Here, the plurality of user terminals 200_1, 200_2, and 200_3 may include a terminal of an authorized operator (e.g., a registered driver or the like) and/or a user who can receive an AR rendering request result for generating AR digital signage.

In an embodiment, the information processing system 800 may include one or more server apparatuses and/or databases capable of storing, providing, and executing computer-executable programs (e.g., downloadable applications) and data related to the generation of AR digital signage or one or more distributed computing devices and/or distributed databases based on cloud computing service.

The result of the rendering request for the AR digital signage provided by the information processing system 800 may be provided to a user through an application related to the provision of AR digital signage, a route guidance application, a mobile browser application, a web browser, or a web browser extension program which is installed in each of the plurality of user terminals 200_1, 200_2, and 200_3.

For example, the information processing system 800 may provide information corresponding to an AR digital signage provision request received from the user terminals 200_1, 200_2, and 200_3 through the route guidance application or the like or may perform a corresponding process.

The plurality of user terminals 200_1, 200_2, and 200_3 may communicate with the information processing system 800 over the network 50. The network 50 may be configured to enable communication between the information processing system 800 and the plurality of user terminals 200_1, 200_2, and 200_3. For example, depending on the installation environments, the network 50 may be configured as a wired network such as Ethernet, wired home network (power line communication), a telephone line communication device, and RS-serial communication, a wireless network such as a mobile communication network, wireless LAN (WLAN), Wi-Fi, Bluetooth, and Zigbee, or a combination thereof. The communication scheme is not limited to the above networks and may include short-range wireless communication between the user terminals 200_1, 200_2, and 200_3 as well as a communication scheme that utilizes a communication network (e.g., a mobile communication network, the wired Internet, the wireless Internet, a broadcast network, a satellite network, etc.).

In FIG. 9, the plurality of user terminals 200_1, 200_2, and 200_3 may be any computing device that is capable of wired and/or wireless communication and in which an application related to the provision of AR digital signage, a route guidance application, a mobile browser application, a web browser, or a web browser extension program can be installed and executed.

For example, the user terminal includes an AI speaker, a smartphone, a mobile phone, a navigation system, a computer, a laptop computer, a digital broadcasting terminal, a personal digital assistant (PDA), a portable multimedia player (PMP), a tablet PC, a game console, a wearable device, an Internet of things (loT) device, a virtual reality (VR) device, an augmented reality (AR) device, a set-top box, and the like.

Alternatively, for example, the user terminal may be a vehicle display device such as a CID, a cluster, a HUD, a room mirror display, an RSE, etc.

Also, the three user terminals 200_1, 200_2, and 200_3 are illustrated in FIG. 9 as communicating with the information processing system 800 through the network 50, but the present disclosure is not limited thereto. A different number of user terminals may be configured to communicate with the information processing system 800 via the network 50.

For example, the information processing system 800 may receive a request for route guidance or a request for the provision of AR digital signage from the plurality of user terminals 200_1, 200_2, and 200_3. The information processing system 800 may collect and merge information for generating AR digital signage in response to the received request, render the information in a display area to be displayed with AR signage, and provide the rendered information to the plurality of user terminals 200_1, 200_2, and 200_3.

Specifically, the information processing system 800 may receive sensing data of the vehicle 100 (see FIG. 8), request the cloud server to provide map information associated with the received vehicle sensing data, and receive and store the map information. The information processing system 800 may detect a building area including a plurality of pieces of POI information, calculate spatial coordinates of the detected building area, and acquire floor number information for each of the plurality of pieces of POI information on the basis of the received map information.

Also, the information processing system 800 may calculate the reference point of the building area for displaying content information related to the plurality of pieces of POI information on the basis of the sensing data of the vehicle and the spatial coordinate and floor number information of the building area. Also, the information processing system 800 may perform a rendering request to display AR digital signage corresponding to the content information related to the plurality of pieces of POI information in the display area determined based on the calculated reference point. Here, the rendering request may be performed by an AR engine, and the AR engine can be understood as referring to the operation of processors of the user terminals 200_1, 200_2, 200_3, a processor of an electric device embedded in the vehicle, a processor of the information processing system 800, or a processor of a linked apparatus, server, or system.

Subsequently, the information processing system 800 may transmit the result of the AR rendering request to the user terminals 200_1, 200_2, and 200_3 and may transmit an image correction request such that the user terminals 200_1, 200_2, and 200_3 map an image of the AR digital signage corresponding to the result of the rendering request to a display area of a building in a driving image acquired through a vision sensor on a floor-by-floor basis. The user terminals 200_1, 200_2, and 200_3 may map and output the image of the AR digital signage to the display area of the building in the driving image on a floor-by-floor basis and/or may map and output the image of the AR digital signage on a floor-by-floor basis in response to the image correction request received from the information processing system 800.

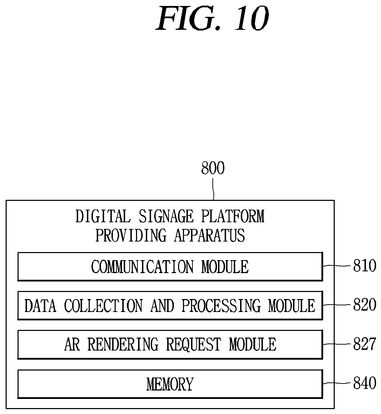

FIG. 10 is a diagram illustrating a configuration of the digital signage platform providing apparatus 800 according to an embodiment of the present disclosure.

In some embodiments, the digital signage platform providing apparatus 800 may be implemented as a device embedded in the navigation system 770 or the user terminal 200 embedded in or linked with the vehicle 100, as described above. Also, in some embodiments, the digital signage platform providing apparatus 800 may be implemented as a platform provided by the cloud server. Also, in other embodiments, the digital signage platform providing apparatus 800 may be implemented in the form of a separate terminal, device, system, or program independent of the vehicle 100 and the cloud server.

Referring to FIG. 10, the digital signage platform providing apparatus 800 according to an embodiment of the present disclosure may include a communication module 810, a data collection and processing module 820, an AR rendering request module 830, and a memory 840. However, the present disclosure is not limited thereto, and the digital signage platform providing apparatus 800 may include fewer elements or more elements. For example, the digital signage platform providing apparatus 800 may include an additional element such as an AR engine formed to perform rendering.

The communication module 810 is formed so that the digital signage platform providing apparatus 800 can communicate with the cloud server 900 (see FIG. 8), the vehicle 100, and the user terminal 200. For example, in order to perform communication, the digital signage platform providing apparatus 800 may include at least one or a transmitting antenna, a receiving antenna, and a radio frequency (RF) circuit and an RF device capable of implementing various communication protocols or may include a wired or wireless interface device.

The data collection and processing module 820 collects, filters, and processes information that is related to vehicle sensing data, image data, a user input request, map information, and content information such as the location, the number of floors, and advertisements of the building area including the plurality of pieces of POI information and that is received through the communication module 810. Also, the information collection and processing module 820 may perform a series of operations for filtering, processing, and merging one or more pieces of information to generate AR digital signage corresponding to the content information related to the plurality of pieces of POI information.

The AR rendering request module 830 performs a rendering request to generate AR digital signage corresponding to the plurality of pieces of POI information. The AR rendering request module 830 causes the AR engine to, in operative association with a route guidance map of the vehicle, match the viewpoint (first viewpoint) of the driving image or the actual driving road to the viewpoint (second viewpoint) of the screen in which the AR digital signage is to be rendered, determine the display area in which the AR digital signage is to be rendered, and vary the display area continuously or in real time.

The memory 840 includes programs and instructions related to the overall operation of the digital signage platform providing apparatus 800. The memory 840 is communicatively connected to at least one processor (not shown), and the at least one processor may execute a program implemented with at least one computer-readable instructions included in the memory 840.

To this end, the memory 840 may include instructions for, in response to a request received from the user terminal, receiving sensing data of the vehicle linked with the user terminal and requesting the cloud server to provide map information associated with the sensing data of the vehicle. Also, the memory 840 may include instructions for calculating spatial coordinates of the building area including the plurality of pieces of POI information from the map information received from the cloud server and acquiring floor number information for each of the plurality of pieces of POI information on the basis of the spatial coordinates. Also, the memory 840 may include instructions for calculating the reference point of the building area in which the content information related to the plurality of pieces of POI information is to be displayed, on the basis of the sensing data of the vehicle and the floor number information and the spatial coordinates of the building area. Also, the memory 840 may include instructions for performing a rendering request to display AR digital signage corresponding to the content information in a display area determined based on the calculated reference point (i.e., a location in which an AR object is to be rendered). Also, the memory 840 may include instructions for transmitting the result of the rendering request to the user terminal and performing an image correction request to allow the user terminal to map the image of the AR digital signage corresponding to the result of the rendering request to the display area in the driving area acquired through the vision sensor on a floor-by-floor basis.

Meanwhile, the digital signage platform providing apparatus 800 configured to include such a configuration or function may be implemented as a part of a device or system embedded in the vehicle 100, implemented as a separate device or system, or embedded in the user terminal (or the user interface device 200 (see FIG. 7) or the navigation system 770).

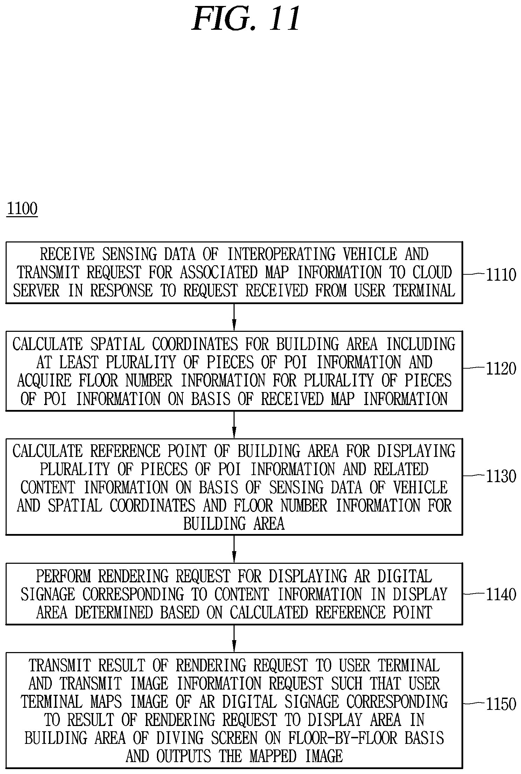

FIG. 11 is a representative flowchart illustrating an operating method 1100 of a digital signage platform providing apparatus according to an embodiment of the present disclosure.

The operating method 1100 of FIG. 11 may be implemented by a processor provided in the digital signage platform providing apparatus 800 or a processor provided in a user terminal (or a vehicular electronic device or system of a vehicle, a cloud server, etc.) communicatively connected to the digital signage platform providing apparatus 800 and may provide a platform for generating AR digital signage.

Referring to FIG. 11, first, the operating method 1100 is disclosed as a process of receiving, by the digital signage platform providing apparatus, sensing data of a linked vehicle and transmitting a request for associated map information to the cloud server in response to a request received from the user terminal (1110).

In an embodiment, the map information may include POI information and 2D/3D map information included within a predetermined range based on the current location of the vehicle. In another embodiment, the map information may be a driving image captured through a vision sensor, such as a camera, of the vehicle.

The digital signage platform providing apparatus calculates spatial coordinates of the building area including the plurality of pieces of POI information from the received map information and acquires floor number information for each of the plurality of pieces of POI information (1120).

In other words, when a building including a plurality of POls is detected or recognized from the map information by the processor of the digital signage platform providing apparatus, the digital signage platform providing apparatus may calculate xyz coordinate information of the building as the spatial coordinates.

In one embodiment, when the map information is 2D/3D map information received from the cloud server, the digital signage platform providing apparatus may receive the information regarding the location, height, and number of floors of the building area including the plurality of pieces of POI information on the basis of the map information and calculate the spatial coordinates of the building area. In another embodiment, when the map information is a driving image acquired through a camera provided in the vehicle, the digital signage platform providing apparatus may estimate the location, height, and number of floors of the building area on the basis of the driving image and estimate the spatial coordinates from the location, height, and number of floors.

In this way, when the spatial coordinates of the building area are calculated, the digital signage platform providing apparatus may calculate or estimate floor number information for each of the plurality of pieces of POI information included in the building area. For example, the digital signage platform providing apparatus may calculate a floor-by-floor height value, i.e., a height offset on the basis of the height and number of floors of the building included in the spatial coordinates of the building area and may compute or estimate the number of floors corresponding to the plurality of pieces of POI information on the basis of the calculated height offset.

Subsequently, the digital signage platform providing apparatus calculates a reference point for displaying content information related to the plurality of pieces of POI information on the basis of the sensing data of the vehicle and the spatial coordinates and floor number information of the building area (1130).

Here, POI-related content information may refer to a brand icon, a 3D model, a still image, and a moving image for POI-related advertisement exposure.

The reference point of the building area for displaying the content information may be calculated by matching the information regarding the vehicle sensing data (the vehicle's driving speed and direction), the spatial coordinates of the building area, and the floor number information of the plurality of pieces of POI information to correspond to the driving image. That is, by using AR technology, the viewpoint of the driving image or the actual driving road (e.g., in the case of an AR navigation device in which AR digital signage is projected on a windshield through a laser sensor) and the content information are matched to the viewpoint of the screen for finding the reference point of the building area for displaying the content information.

In an embodiment, the reference point may be determined as a coordinate point close to the current location among the spatial coordinates of the building area on the basis of the driving direction of the vehicle.

In an embodiment, the display area for each of the plurality of pieces of POI information is obtained by applying a height offset to the floor number information corresponding to the plurality of pieces of POI information with respect to the reference point and is set as a location moved from the reference point by a corresponding floor number + a height offset.

Here, the coordinate point close to the current location of the vehicle may be acquired or estimated by detecting edges of the building identified using coordinate data included in the map information or camera sensing information provided in the vehicle. In this case, a reference point for each piece of content information corresponding to the plurality of pieces of POI information (hereinafter referred to as a "floorwise reference point") may be set as the reference point + a height offset corresponding to a floor number matched to each piece of POI information. That is, a floorwise reference point is calculated for and applied to each of the plurality of pieces of content information.

The digital signage platform providing apparatus performs an AR rendering request to display AR digital signage corresponding to the content information in a display area determined based on the calculated reference point (1140).

In this regard, the digital signage platform providing apparatus may determine display areas for mapping a plurality of pieces of AR digital signage matched to the plurality of pieces of POI information to corresponding floors of the building.

Specifically, the digital signage platform providing apparatus may determine the display areas of the plurality of pieces of AR digital signage corresponding to the plurality of pieces of POI information using floor number information matched to the plurality of pieces of POI information and height information of the building area calculated based on the spatial coordinates for the building area.

In an embodiment, when the spatial coordinates for the building area cannot be acquired based on the map information, the digital signage platform providing apparatus may determine a display area to which the content information is to be mapped by using floor number information and height information of the building area estimated using the camera sensing information included in the vehicle sensing information.

Meanwhile, according to an embodiment of the present disclosure, the AR rendering request performed by the digital signage platform providing apparatus is performed by an AR engine. The AR engine may be implemented by a processor of the digital signage platform providing apparatus, a processor of the user terminal, a processor of another vehicular electronic device or system of the vehicle, or a cloud server.

When rendering is performed through the AR engine as described above, the digital signage platform providing apparatus transmits a result of the rendering request to the user terminal. Thus, the digital signage platform providing apparatus transmits an image correction request to the user terminal so that the user terminal maps an image of AR digital signage corresponding to the result of the rendering request to a display area of the building in the driving image acquired through the vision sensor on a floor-by-floor basis and then outputs the image (1150).

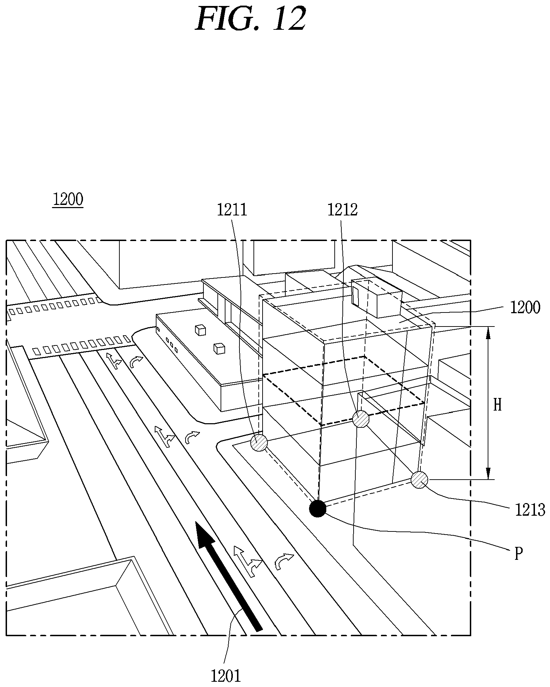

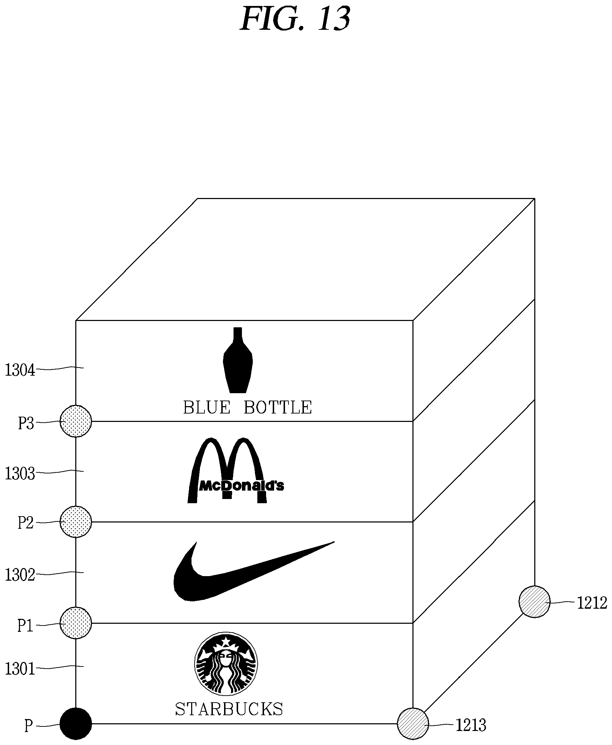

In an embodiment, the image correction request may be a request for mapping the image of the AR digital signage so that each display area matched to a corresponding piece of content information is moved from the calculated reference point by the height of each piece of floor number information. This will be described in detail below with reference to FIGS. 12 and 13.

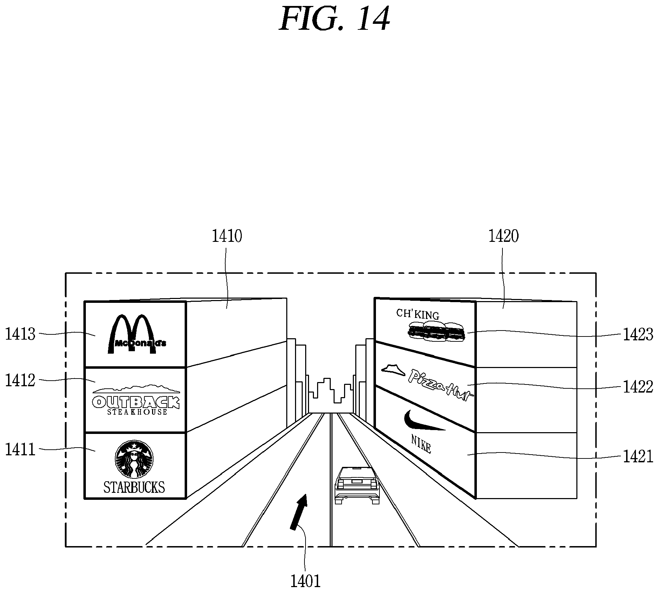

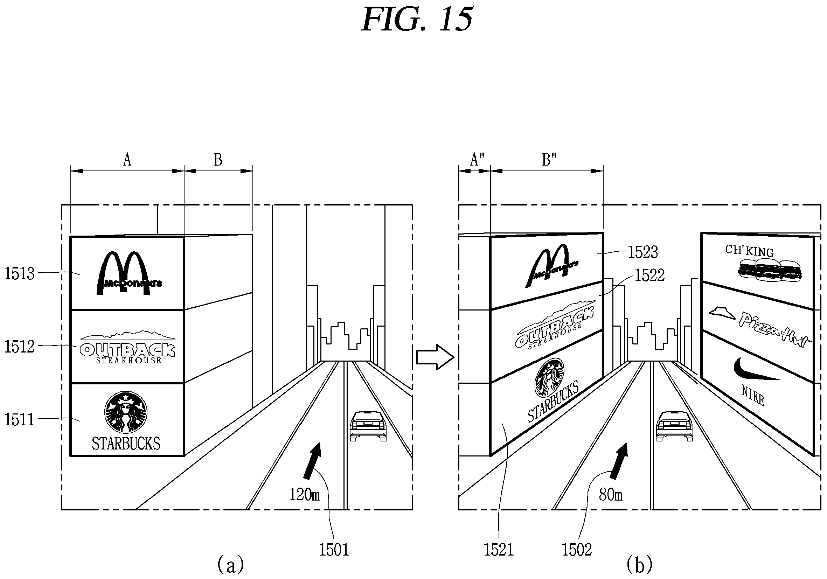

Also, in an embodiment, the image correction request may be a request to map, on a floor-by-floor basis, AR digital signage to a display area that is changed based on the reference point (or a floorwise reference point) and the driving direction and speed of the vehicle. A specific example thereof will be described in detail below with reference to FIGS. 14 and 15.

FIGS. 12 and 13 are diagrams illustrating a method of arranging AR digital signage on a floor-by-floor basis in a building area of a driving image according to an embodiment of the present disclosure.

The method of arranging AR digital signage on a floor-by-floor in a building area of a driving image may be implemented by a processor of the digital signage platform apparatus according to the present disclosure. Alternatively, as another example, the method may be implemented by a processor of a vehicle display device (e.g., a user interface device, navigation system, or the like provided in a vehicle) including a digital signage platform or may be implemented by a communicatively connected cloud server.

Referring to 12, when a building area 1200 including a plurality of pieces of POI information is detected, the digital signage platform providing apparatus according to the present disclosure may calculate (or estimate) spatial coordinates 1211, 1212, 1213, and P for the building areas on the basis of the map information (e.g., 2D/3D map information, the number of floors of the building area, and height information, etc.) or the driving image acquired through a camera provided in the vehicle.

The digital signage platform providing apparatus may extract an origin P for mapping AR digital signage to the driving image on a floor-by-floor basis by using the sensing data of the vehicle (e.g., a vehicle driving direction), the spatial coordinates 1211, 1212, 1213, and P, and the information on the height and number of floors of the building included in the map information (or estimated through the detection of edges of the driving image).

That is, considering the driving direction 1201 of the vehicle among the spatial coordinates 1211, 1213, 1213, and P of the building area, reference coordinates closest to the location of the vehicle included in the sensing data of the vehicle is set as the origin P.

For example, when the information on the number of floors and height of the building area 1200 can be acquired, the digital signage platform providing apparatus may calculate the origin P considering the driving direction of the vehicle. However, when the map information for the building area 1200 is not present (or is not recognized) or when the information on the number of floors and height cannot be acquired, the digital signage platform providing apparatus may extract the origin of the building area by estimating the number of floors and height of the building from the image of the building using the sensing information of the camera provided in the vehicle and detecting edges of the image. In this case, the height for each floor may use a predefined value.

Meanwhile, in order to display a plurality of pieces of AR digital signage on a floor-by-floor basis, a "floorwise reference point" should be calculated for each of the plurality of pieces of AR digital signage.

In this regard, referring to FIG. 13, the "floorwise reference point" for each of the plurality of pieces of AR digital signage may be placed by moving the height by the number of floors of the POI information with respect to the origin P and the spatial coordinates 1211, 1212, 1213, and P of the building area. That is, the digital signage platform providing apparatus determines, as a "floorwise reference point," a location to which a height offset corresponding to the number of floors matched to the origin P + each piece of POI information is applied, and requests correction such that corresponding AR digital signage is mapped to the location.

In FIG. 13, the reference point of first AR digital signage 1301 displayed on the first floor of the building area 1200 is determined as the origin P. The floorwise reference point of second AR digital signage 1302 displayed on the second floor of the building area 1200 is determined as a point P1 obtained by applying a height offset corresponding to the second floor to the origin P. Also, the floorwise reference points of third AR digital signage and fourth AR digital signage displayed on the third floor and the fourth floor of the building area 1200 are determined as points P2 and P3 obtained by applying the height offsets corresponding to the third floor and the fourth floor to the origin P.

In order to more accurately calculate the height information of the building area, in one embodiment, the digital signage platform providing apparatus may compare the height information (e.g., an interfloor height offset) of each display area determined based on the floorwise reference points and the height information included in the map information (e.g., 2D/3D map information) received from the cloud server and may correct at least one of the location and shape of each display area on the basis of the comparison result. Also, in an embodiment, when the detected difference between the height information and the value of a set of interfloor heights that are initially calculated and the height information of the building area acquired through a database (DB) is greater than or equal to a threshold value (a normal error range), the digital signage platform providing apparatus may correct the location of each display area using the height information of the database (DB).

For example, the digital signage platform providing apparatus may change the interfloor height offset described with reference to FIG. 13. Alternatively, the digital signage platform providing apparatus may, for example, map a plurality of pieces of AR digital signage 1301, 1302, 1303, and 1304 to the lateral side, not the front side, of the building area 1200 in FIG. 13 on a floor-by-floor basis.

Meanwhile, in an embodiment, the plurality of pieces of AR digital signage 1301, 1302, 1303, and 1304 mapped to the building area 1200 on a floor-by-floor basis surround at least one side of each display area of the building in the driving image. For example, in FIG. 13, the plurality of pieces of AR digital signage 1301, 1302, 1303, and 1304 are formed to surround the front side of the building area 1200 on a floor-by-floor basis. Accordingly, a plurality of advertisement exposure effects are provided to one building on a floor-by-floor basis, and this gives a realistic feeling as if a real signage signboard is placed on the building.

Example methods of naturally and variably providing images of a plurality of pieces of augmented reality (AR) digital signage by flexibly reflecting various changes in a building's shape based on a driver's viewing angle (or a vehicle's front viewing angle), a vehicle driving situation, a driver's personal tendency, and nearby traffic and structural environments will be described below.

As described above, when AR digital signage such as an actual signage electric signboard is provided on one side of a building area on a floor-by-floor basis, a realistic feeling is further increased. However, since it does not reflect vehicle driving or nearby situations, there is a limitation in that the advertising exposure time is short.

In addition, when AR digital signage is always mapped to a specific display area of a building (e.g., the front of a building), the size of the specific display area may decrease or disappear from view depending on the current location and driving direction of the vehicle. In this case, the advertising exposure time of AR digital signage is reduced by that much.

Furthermore, when the specific display area to which the AR digital signage is mapped is obscured by a structure, the AR digital signage may not be recognized at all. That is, as the visibility of AR digital signage is not secured, the advertising effect is reduced.

FIG. 14 is a diagram illustrating a method of selecting a display area of floorwise AR digital signage on the basis of the shape of a building area according to an embodiment of the present disclosure.

In the present disclosure, the form of a building area or the shape of an image of a building area refers to the shape of the front and lateral sides of the building area varying in real time with respect to a driver's view (or a vehicle's front view) in two dimensions. Also, the shape of the front and lateral sides of the building area may be expressed as numerical information about the front and lateral sides of the building area varying in real time with respect to a driver's view (or a vehicle's front view) in two dimensions.

Here, the driver's view (or the vehicle's front view) may be assumed to coincide with the driving direction of the vehicle. Also, here, the numerical information may include, for example, the areas of the front and lateral sides of the building area, the area ratio, and the distortion ratio.

In an embodiment, the display device 200 according to the present disclosure may determine a display area of AR digital signage on the basis of an image of the building area in the driving image. When the display area is changed based on the shape of the image of the building area, the display device 200 may map the AR digital signage to the changed displayed area and display the mapped AR digital signage.

Here, the determining of the display area based on the image of the building area may refer to the display device 200 determining the display position of floorwise AR digital signage on the side of a building in a driving image acquired through a vision sensor by communication with a system including the above-described digital signage platform providing device 800 and the vehicle 100.

The display position may be one of the front side or the lateral side of the building area. In the present disclosure, the display position may be determined to be more advantageous in securing the visibility of the AR digital signage.

Also, here, the changing of the display area based on the shape of the image of the building area may refer to the display device 200 changing the display position of floorwise AR digital signage from the front side (or the lateral side) of the building in the driving image acquired through the vision sensor to the lateral side (or the front side) or to other nearby locations by communication with a system including the above-described digital signage platform providing device 800 and the vehicle 100.

The changed display position may include other nearby locations outside the building as well as the front side or the lateral side of the building area. In the present disclosure, the changed display position is determined to be a side that is advantageous in securing the visibility of the AR digital signage or to be another position.

To this end, the display device 200 receives, from the vehicle 100, vehicle sensing data including driving-related information (e.g., the driving direction and driving speed of the vehicle, etc.) and information on the driving image acquired through the vision sensor in real time. Also, the display device 200 may deliver the collected data to the digital signage platform providing system so that the digital signage platform providing system can perform data collection, processing, filtering, and merging for displaying the AR digital signage on the determined or changed display area on a floor-by-floor basis and perform an AR rendering request.

Referring to FIG. 14, for example, while the vehicle is driving, building area A 1410 and building area B 1420 each including a plurality of pieces of POI information in the driving image are displayed on the left and right sides of the driving road. A first plurality of pieces of AR digital signage 1411, 1412, and 1413 are mapped to building area A 1410 on a floor-by-floor basis, and a second plurality of pieces of AR digital signage 1421, 1422, and 1423 are mapped to building area B 1420 on a floor-by-floor basis.

The display areas of the first plurality of pieces of AR digital signage 1411, 1412, and 1413 and the second plurality of pieces of AR digital signage 1421, 1422, 1423 are determined to be positions that are advantageous in securing visibility with respect to the driving direction 1401 of the vehicle.

The first plurality of pieces of AR digital signage 1411, 1412, and 1413 and the second plurality of pieces of AR digital signage 1421, 1422, and 1423 are displayed on display areas that are advantageous in securing visibility on the front and lateral sides of the building areas 1410 and 1412, respectively. For example, the lateral side of building area A 1410 is determined as the display area of the first plurality of pieces of AR digital signage 1411, 1412, and 1413, and the front side of building area B 1420 is determined as the display area of the second plurality of pieces of AR digital signage 1421, 1422, and 1423.

This is because, based on the driving direction 1401 of the vehicle, the lateral side is more advantageous in securing visibility in the case of building area A 1410 and the front side is more advantageous in securing visibility in the case of building area B 1420.

As described above, in the present disclosure, the display device 200 may be operated to determine the display areas on the basis of the image of the building area and change the display areas on the basis of the shape of the image of the building area in order to allow different display sides of each building area in the driving image to be determined as the display areas of the floorwise AR digital signage at the same time.

To this end, the display device 200 according to the present disclosure may determine the display area on the basis of the widths (areas) of the front side and the lateral side in order to determine, as the display area, a position with high visibility in the front and lateral sides of the building area with respect to the driving direction of the vehicle.

In an embodiment, the display device 200 may compare the difference between the widths (areas) of the front side and the lateral side of the building area to a preset critical value and may select one of the front side and the lateral side on the basis of the comparison result. Here, the preset critical value refers to a reference value for determining a display area only by the width size. Accordingly, the display device 200 may be limited to use only widths to determine a display area only when the difference of the widths (areas) of the front side and the lateral side of the building area exceeds the preset critical value.

For example, when the difference between the widths of the front side and the lateral side of the building area exceeds the preset critical value, the display device 200 may select the wider one of the front side and the lateral side of the building area as the display area. On the other hand, when the difference between the widths of the front side and the lateral side of the building area falls below the preset critical, the display device 200 may determine a preset position (e.g., the front side of the building area) as the display area or may display the display area on the basis of another selection criterion.

In an embodiment, when the difference between the widths (areas) of the front side and the lateral side of the building area falls below the preset critical, the display device 200 may select one of the front side and the lateral side of the building area as the display area on the basis of the image distortion ratio of the floorwise AR digital signage.

For example, when the difference between the widths of the front side and the lateral side of the building area falls below the preset critical value, the display device 200 may select the one of the front side and the lateral side of the building area in which the image distortion ratio of the floorwise AR digital signage is smaller as the display area. Alternatively, when the difference between the widths of the front side and the lateral side of the building area falls below the preset critical value, the display device 200 may select the one of the front side and the lateral side of the building area in which the distortion ratio of text (font) included in the floorwise AR digital signage is smaller as the display area. Here, the image distortion ratio of the front side and the lateral side of the building area and the distortion ratio of text (font) included in the floorwise AR digital signage may be calculated after a predetermined weight is assigned to each image.

In FIG. 14, the first plurality of pieces of AR digital signage 1411, 1412, and 1413 are mapped to display areas of the lateral side of building area A 1410 in which the difference between the widths (areas) of the front side and the lateral side of the building area falls below the preset critical value and in which the image distortion ratio of the floorwise AR digital signage is smaller.

Also, in FIG. 14, the second plurality of pieces of AR digital signage 1421, 1422, and 1423 are mapped to display areas of the front side of building area B 1420 in which the difference between the widths (areas) of the front side and the lateral side of the building area exceeds the preset critical value and which has a greater width than the lateral side.

As described above, the display device 200 according to the present disclosure may determine the display area of the image of the floorwise AR digital signage on the basis of the image of the building area in the driving image acquired through the vision sensor by communication with the vehicle 100 and the digital signage platform providing system. Also, the display device 200 according to the present disclosure may change the display area on the basis of the shape of the image of the building area in the driving image acquired through the vision sensor, transmit information on the changed display area to the digital signage platform providing system, and receive a rendering result or related information for mapping an image of the AR digital signage corresponding to the changed display area from the corresponding system.

Also, in an embodiment, a processor of the display device according to the present disclosure may change the display area on the basis of the image distortion ratio of the building area recognized through the camera of the vehicle. In this case, by transmitting the information on the changed display area to the digital signage platform providing system, the display device may receive the rendering result or related information for displaying the AR digital signage on the changed display area on a floor-by-floor basis.

FIG. 15 is a diagram illustrating a method of selecting a display area of floorwise AR digital signage on the basis of vehicle driving information according to an embodiment of the present disclosure.

In the present disclosure, even after the display area is determined and the AR digital signage is displayed on a floor-by-floor basis, the display device may calculate the widths of the front side and the lateral side of the building area changing along with the driving of the vehicle, change the display area on the basis of the calculation result, and map the floorwise AR digital signage to the changed display area. This provides an advantageous effect of securing the visibility of AR digital signage in real time.

As described above, in order to calculate the widths of the front side and the lateral side of the building area changing along with the driving of the vehicle, the display device 200 according to the present disclosure may calculate the widths on the basis of the change in shape of the image of the front side and the lateral side of the building acquired through the vision sensor of the vehicle.

In FIG. 15, as shown in 15A, at the beginning (at a first time point), a plurality of pieces of AR digital signage 15111, 1512, and 1513 are mapped and displayed using the lateral side of the building area in the driving image as the display area. As described above with reference to FIG. 14, since the difference between the widths A and B of the front side and the lateral side of the building area is less than or equal to the preset critical value on the basis of the current location and the driving direction 1501 of the vehicle at the first time point, the lateral side, which has a smaller image distortion ratio, is determined as the display area.

Subsequently, when the vehicle approaches the building area (a second time point after the first time point) as the vehicle is driving, as shown in FIG. 15B, the display area is changed to the front side of the building area in the driving image, and a plurality of pieces of AR digital signage 1521, 1522, and 1523 are mapped and displayed. That is, although the display area has been determined once, the display device 200 changes the display area itself from the lateral side to the front side beyond mapping the plurality of pieces of AR digital signage 1511, 1512, and 1513 according to the image of the display area of the lateral side varied along with the driving of the vehicle.

Since the difference between the widths A" and B" of the front side and the lateral side of the building area exceeds the preset critical value on the basis of the current location and the driving direction 1502 of the vehicle at the second time point, the front side, which is a greater width, may be determined as the display area.

In an embodiment, the processor of the display device 200 according to the present disclosure may change the display area to which the image of the floorwise AR digital signage is to be mapped on the basis of the sensing data of the vehicle received while the vehicle is driving.

For example, as described above with reference to FIG. 15, the display device 200 may receive the sensing data of the vehicle (e.g., the current location and driving direction of the vehicle) in real time and monitors whether the difference between the widths of the front side and the lateral side of the same building area exceeds the preset critical value.

When the monitoring result is that the difference between the width values exceeds the preset critical value, the side that has a greater width at the current time may be displayed as the display area. In this case, when the floorwise AR digital signage is currently displayed on the side that has a smaller width, the display area may be changed. On the other hand, when the monitoring result is that the difference between the widths is less than or equal to the preset critical value, the one of the front side and the lateral side that has a smaller image distortion ratio (e.g., the side that has a smaller aspect ratio (height offset) difference) is determined as the display area. In this case, when the floorwise AR digital signage is currently displayed on the side having a larger image distortion ratio, the display area may be changed.

In an embodiment, when the areas of the front side and the lateral side of the building area in the driving image acquired through the vision sensor change along with the driving of the vehicle, the processor (or the control unit) of the display device 200 according to the present disclosure may transmit information on the change in the areas to the digital signage platform providing system. Here, the information on the change in the areas may include, for example, information related to the change of the display area such as the difference between the widths of the front side and the lateral side of the building area, the result of comparing the difference between the widths to the critical value, and the image distortion ratios of the front side and the lateral side.

Also, in an embodiment, the processor of the display device 200 may receive a result of a rendering request for generating AR digital signage on the basis of the information on the changed in the areas and may change the display area of the floorwise AR digital signage from one side of the building area in the driving image to another side and then perform mapping.

In an embodiment, the processor of the display device 200 may map the floorwise AR digital signage while gradually moving the floorwise digital signage from one side of the building area in the driving image to another side according to the driving direction and driving speed of the vehicle.

For example, referring to FIG. 15, when it is determined that the display area is changed from the lateral side to the front side, the first plurality of pieces of AR digital signage 1511, 1512, and 1513 that have been displayed on a floor-by-floor basis on the lateral side of the building may gradually move toward the front side along with the driving of the vehicle as shown in FIG. 15A and may be seamlessly moved and then displayed on the front side of the building after a certain period of time as shown in FIG. 15B. Thus, an antipathy to the display of the second plurality of pieces of AR digital signage 1521, 1522, and 1523 is minimized, and the advertising exposure time is increased as the digital signage is moved along the driving direction of the vehicle.

Meanwhile, according to the present disclosure, when AR digital signage is displayed on a building of a driving image on a floor-by-floor basis, a realistic feeling is further increased like real signage. However, as a vehicle approaches the building, the building and the signage mapped to the building deviate from the driving image, and thus visibility is reduced.

However, when a vehicle enters a building including a plurality of pieces of POI information or when a destination POI is located in a building, the need for floorwise AR digital signage is further increased. Accordingly, a method of providing differentiated floorwise AR digital signage while a vehicle approaches a building area including a plurality of pieces of POI information and enters or is expected to enter the corresponding building area will be described in detail below.

In the present disclosure, a situation in which a vehicle enters a building area may be determined based on sensing data of the vehicle including the current location of the vehicle, the distance between the vehicle and the corresponding building area, and the driving speed of the vehicle. For example, when the vehicle approaches the corresponding building area and reduces the driving speed without situations such as waiting for a light change or finding an obstacle, this may be determined as a situation in which the vehicle enters the building area.

In the present disclosure, a situation in which a vehicle is expected to enter a building area may be determined based on the current location of the vehicle, the distance between the vehicle and the corresponding building area, whether a destination or waypoint POI is included in the building area, the specificity of the building area, whether a user's preferred band or POI is included, and the like.

In the present disclosure, the case in which conditions for allowing a vehicle to enter a building area are satisfied may refer to a case corresponding to a situation in which the vehicle enters the building area and/or a situation in which the vehicle is expected to enter the building area. In the present disclosure, whether the conditions for allowing a vehicle to enter a building area are satisfied may refer to determining whether the vehicle enters the building area and/or whether the vehicle is expected to enter the building area.

In the present disclosure, an AR carpet refers to an AR object that is mapped as if a thin layer of carpet is laid in a certain range of a road/sidewalk/floor in a driving image. The AR carpet may be implemented to have a transparency equal to a certain value or a predetermined texture, pattern, or the like so that the area of the mapped road, sidewalk, or floor can be seen transparently and then may be mapped.

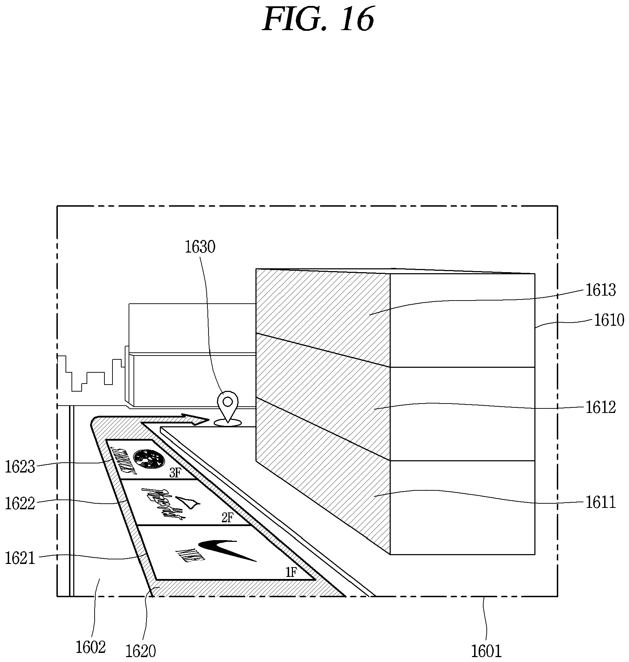

FIG. 16 is a diagram illustrating a method of mapping floorwise AR digital signage to an AR carpet rather than a building according to an embodiment of the present disclosure.

In the present disclosure, a display device 200 linked to a vehicle (e.g., a center information display (CID), a cluster, a head-up display (HUD), a rearview mirror display, a rear seat entertainment (RSE), and a display device or terminal that projects driving images onto the vehicle's windshield or dashboard) may map and display floorwise AR digital signage on a driving image projected or acquired through a vision sensor (e.g., a camera, an imaging laser sensor, etc.) of the vehicle.

To this end, a processor of the display device 200 may communicate with the vehicle and the digital signage platform providing system and may transmit a request for generating the AR digital signage on a floor-by-floor basis to the corresponding system. Also, the processor of the display device 200 may receive a result of the request from the system and may map and display corresponding AR digital signage on a building area in the driving image on a floor-by-floor basis. To this end, the processor of the display device 200 may be implemented to include an AR engine or perform the same function as an AR engine.

Referring to FIG. 16, the display device 200 may map and display a plurality of pieces of AR digital signage 1611, 1612, and 1613 on one surface of a building 1610 in a driving image 1601 acquired through the vision sensor of the vehicle on a floor-by-floor basis.

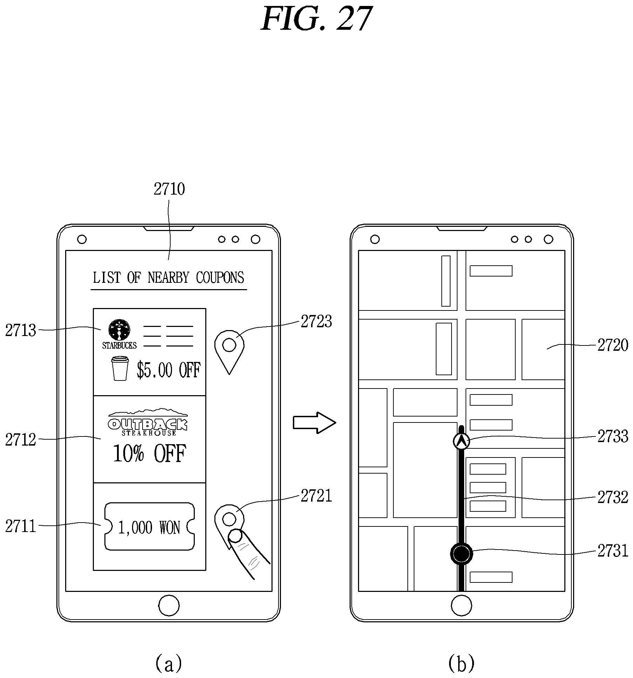

To this end, the display device 200 may communicate with the vehicle to receive the sensing data of the vehicle, for example, the current location of the vehicle, driving-related information of the vehicle, and the like. Also, the display device 200 may communicate with the digital signage platform providing system 1000 (see FIG. 27) to transmit the sensing data of the vehicle, receive associated POI information, for example, the spatial location of the building including a plurality of pieces of POI information, and floor number information, and receive traffic-related information of the vehicle from a cloud.

The display device 200 may recognize at least the spatial location of the building area including the plurality of pieces of POI information on the basis of the received information.

The display device 200 may transmit, to the system 1000, a request for generating AR digital signage corresponding to content information related to the plurality of pieces of POI information on a floor-by-floor basis (hereinafter referred to as a first request) using the sensing data of the vehicle, the spatial location of the building area, and the floor number information. Also, the display device 200 may receive the results of collection, processing, filtering, and matching of data corresponding to the request from the system 1000 and may map and display AR digital signage on the building in the driving image on a floor-by-floor basis.

The display device 200 may transmit, to the system 1000, a request for generating an AR carpet for guiding entry into the building in the driving image (hereinafter referred to as a second request) on the basis of the driving-related information included in the sensing data of the vehicle. Also, the display device 200 may receive the results of collection, processing, filtering, and matching of data corresponding to the request from the system 1000 and may map and display an AR carpet on the road in the driving image.

In this case, the mapping position of the AR carpet may be determined based on the current location of the vehicle. For example, the AR carpet may be mapped and displayed in the range of 2 to 10 m ahead of the current location of the vehicle and the road lane in which the vehicle is traveling.

In an embodiment, the display device 200 may transmit the first request and the second request simultaneously or sequentially. Also, the display device 200 may receive the results of the first request and the second request from the system 1000 simultaneously or sequentially. Also, the display device 200 may map and display AR objects (e.g., floorwise AR digital signage and AR carpet) corresponding to the received result according to the current locations of the vehicle and the building area and whether predetermined conditions are satisfied, irrespective of the order in which the results of the first and second requests are received.

Referring to FIG. 16, when the vehicle approaches the building 1610 and at least one of the plurality of pieces of POI information included in the corresponding building 1610 is set as a destination POI 1630, the processor of the display device 200 may determine this case as the situation in which the vehicle is about to enter the building 1610 or the situation in which the vehicle is expected to enter the building 1610.

In this case, the processor of the display device 200 may map and display an AR carpet 1620 for guiding entry into the building 1610 to the road 1602 in the driving image 1601 on the basis of the result of the request for generating the AR carpet received from the linked digital signage system.

When the AR carpet 1620 is mapped and displayed on the road 1602 in the driving image 1601, the processor of the display device 200 may monitor, for a certain time (e.g., within one or two seconds), whether there is a change in the situation in which the vehicle is about to enter the building 1610 or the situation in which the vehicle is expected to enter the building 1610.

When the monitoring result is that there is no change in the situation in which the vehicle is about to enter the building 1610 or the situation in which the vehicle is expected to enter the building 1610, the processor of the display device 200 changes the AR carpet 1620 to a display area and maps and displays the plurality of pieces of AR digital signage 1621, 1622, and 1623 on the AR carpet 1620. In this case, the plurality of pieces of AR digital signage 1611, 1612, and 1613 that have been displayed on the front of the building 1610 on a floor-by-floor basis may be resized and displayed continuously (e.g., with a size smaller than the front surface of the building 1610) or may disappear.

When the monitoring result is that the situation in which the vehicle enters the building 1610 or the situation in which the vehicle is expected to enter the building 1610 is changed (e.g., when the vehicle is running straight past the building 1610), the processor of the display device 200 may operate so that the AR carpet 1620 is no longer displayed on the road 1602 in the driving image 1601. This is because it is no longer necessary to guide the entry of the vehicle.

In an embodiment, the AR digital signage mapped and displayed on the AR carpet 1620 may be limited to some of the plurality of pieces of AR digital signage 1621, 1622, and 1623. For example, although not shown, the mapped and displayed AR digital signage may be limited to only AR digital signage corresponding to floorwise representative POI information, or the maximum number of pieces of AR digital signage to be displayed on the AR carpet 1620 (e.g., less than five or a number smaller than the number of floors of the building 1610) may be preset.

The AR carpet 1620 may include visual information (e.g., an arrow image) for guiding entry into the building 1610. For example, when the building 1610 includes a destination POI in FIG. 16, the AR carpet 1620 may be implemented and mapped to include an indication for the destination POI 1630 and visual information (e.g., an arrow image) for guiding a parking lot of the building 1610.

The plurality of pieces of AR digital signage 1621, 1622, and 1623 mapped on the AR carpet 1620 may be sequentially displayed on floorwise display areas (i.e., the AR carpet 1620) of the building 1610 on the basis of the current location of the vehicle and driving direction. For example, in FIG. 16, the first AR digital signage 1621, the second AR digital signage 1622, and the third AR digital signage 1623 may be mapped and displayed according to the driving direction of the vehicle as if they are spread (layered) on the AR carpet 1620 according to the floor order of the floorwise AR digital signage of the building 1610. This is different from the above-described method in which the floorwise AR digital signage is mapped and displayed on the front or side of the building as if it were erected in the longitudinal direction of the building.

As described above, the display device according to the present disclosure is implemented to map and display an AR carpet and a plurality of pieces of AR digital signage on a road in a driving image rather than a building in order to secure the visibility of the advertisement signage in the situation in which the vehicle is about to enter the building or the situation in which the vehicle is expected to enter the building. Also, visual information can be provided to a road ahead without a driver having to look towards the building to see the destination POI, which helps safe driving.

A method of acquiring a coupon related to the above-described AR digital signage during the driving of the vehicle will be described below.

In the present disclosure, a coupon refers to a preferential ticket or discount coupon that is printed on an invitation letter, a leaflet, or catalog or issued at an Internet shopping mall, etc. to offer priority or discounts. In the present disclosure, coupon information may refer to visual information including such a preferential ticket or discount coupon. In the present disclosure, an AR coupon may refer to an AR object that implements coupon information in conjunction with map information.

While the vehicle is driving, various coupon information related to AR digital signage may be provided in a driving image obtained through a vision sensor of the vehicle. Specific methods regarding which coupon information is to be displayed on the driving image and how a driver can obtain presented coupon information will be presented below.

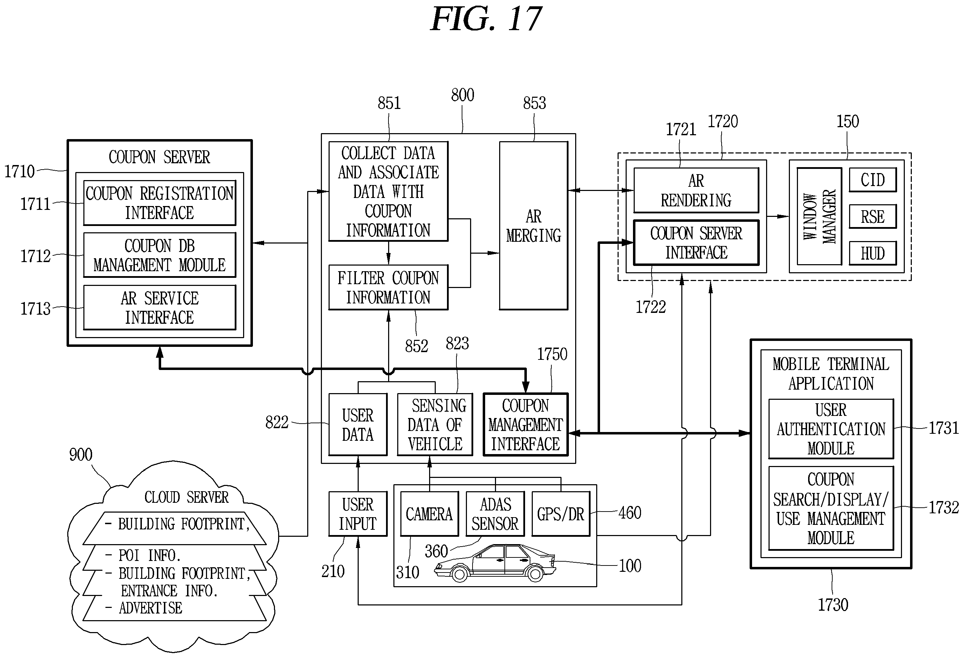

Meanwhile, a navigation device linked to a vehicle, a vehicle navigation device, or a navigation device disclosed below may be understood as the display device 200, which maps and displays the above-described AR digital signage, with an added configuration and function related to the acquisition of AR coupons. Therefore, it should be noted in advance that the implementation of a request by the above-described display device 200, the displaying of a driving image acquired through a vision sensor of the vehicle, the mapping and displaying of an AR object (e.g., floorwise AR digital signage, AR carpet, etc.) in real time, and the varying and mapping of an AR object based on driving information can be directly applied to a navigation device 1720 (see FIG. 17) that will be described below.

Also, an AR platform providing apparatus disclosed below may be understood as the digital signage platform providing apparatus 800 (see FIGS. 8 and 9), the information processing system 800 (see FIG. 9), or the digital signage platform providing system (herein referred to as the digital signage platform providing apparatus 800 or the like) which are related to the generation of the above-described floorwise AR digital signage and to which a configuration and function related to the acquisition of an AR coupon. Accordingly, it should be noted that data collection, data processing, and filtering that can be implemented by the above-described digital signage platform providing apparatus 800 and the matching and rendering request for generating an AR object (e.g., floorwise AR digital signage, AR carpet, etc) may be directly applied to the AR platform providing apparatus 800 (see FIG. 17) that will be described below.

FIG. 17 is a diagram showing an aspect in which the AR platform providing apparatus 800, a vehicle navigation device 1720, a coupon server 1710, and a mobile terminal 1730 communicate with each other according to an embodiment of the present disclosure.

In FIG. 17, the AR platform providing apparatus 800 starts a series of operations for acquiring an AR coupon based on a user input 210 of a navigation device 1720 linked to a vehicle.

In response to a request contained in the user input 210, the AR platform providing apparatus 800 may collect user information, e.g., personal information registered at the time of service subscription (e.g., name, gender, residence, etc.) from the navigation device 1720 and deliver the user information to the user data module 822. Also, the AR platform providing apparatus 800 may provide, to a vehicle sensing data module 823, sensing data collected from sensors provided in the vehicle, such as a camera 310, an ADAS sensor 360, and a GPS/DR sensor 460 of the vehicle 100.

In response to a request contained in the user input 210, the AR platform providing apparatus 800 may receive the above-described map information from the cloud server 900, access an interface 1713 of the coupon server 1710, and collect coupon information associated with the vehicle's location. The collected coupon information is delivered for data collection and coupon information linkage 851, and the AR platform providing apparatus 800 associates the map information and the coupon information, and provides the associated information for coupon information filtering 852.

The coupon information filtering 852 of the AR platform providing apparatus 800 may include filtering coupon information suitable for a driver stepwise on the basis of the vehicle sensing data 823 and/or the user data 822.

For example, the coupon information filtering 852 may include recommending and filtering suitable coupon information (e.g., gas station discount coupon) on the basis of vehicle status information (e.g., remaining fuel/charge amount, replacement periods for vehicle consumables, etc.). Also, for example, the coupon information filtering 852 may include recommending and filtering suitable coupon information (e.g., a coupon for a specific brand) on the basis of user history information such as a user's coupon use history, categories of interest, and recently searched places/destinations/waypoints). AR matching 853 is performed on the filtered coupon information associated with the map information on the basis of the AR rendering request, and the result of performing the AR matching 853 is transmitted to the vehicle navigation device 1720.

The AR rendering 1721 of the navigation device 1720 may include mapping and displaying, in real time, an AR coupon on a display area of the driving image acquired through the vision sensor of the vehicle on the basis of the result of performing the AR matching 853.

The AR coupon may be displayed on the display area of the driving image shown through the display module 150 of the navigation device 1720, for example, a center information display (CID), a cluster, a head-up display (HUD), a rearview mirror display, a rear seat entertainment (RSE), a vehicle windshield or dashboard, etc.

In this case, the display area is determined by the navigation device 1720 and the AR platform providing apparatus 800 communicating with each other to detect the location of POI information corresponding to the coupon information from the driving image acquired through the vision sensor of the vehicle. In an embodiment, the position of the display area may be changed if necessary for the safe driving of the vehicle.

The navigation device 1720 may download a coupon corresponding to the AR coupon on the basis of information on the distance between the location of the vehicle and the display area of the AR coupon. Information on the downloaded coupon may be provided to a coupon management interface 1750 of the AR platform providing apparatus 800 through a coupon server interface 1722. The coupon management interface 1750 transmits the information on the coupon downloaded to the navigation device 1720 (e.g., basic coupon information such as the expiration date of the coupon, POI information, user information, etc.) to the coupon server 1710.

The coupon server 1710 receives the information on the downloaded coupon through the AR service interface 1713 and performs validation for registration in the coupon registration interface 1711. When the validity is verified by the coupon registration interface 1711, the corresponding coupon is uploaded and stored in a coupon database (DB) management module 1712. Also, coupon-related information such as user information, a usage status, an expiration date, and the like of the uploaded coupon may be stored in the coupon DB management module 1712.

The navigation device 1720 may access the downloaded coupon through the user input 210 and the coupon server interface 1722 to cause the coupon to be displayed on the display unit 150. In this case, the form of the downloaded coupon displayed on the display unit 150 may include readable coupon identification information (e.g., QR code, identification code, user identification information, etc.).

The mobile terminal 1730 may execute a preset application (e.g., a coupon service application, etc.) to access the AR platform providing apparatus 800 and the navigation device 1720 of the vehicle. The mobile terminal 1730 may access the coupon server 1710 through the coupon server interface 1722 and/or the coupon management interface 1750.

When the mobile terminal 1730 accesses the coupon server 1710, a coupon of the corresponding vehicle uploaded to the coupon DB management module 1712 may be downloaded on the basis of a result of user authentication performed through the user authentication module 1731. Subsequently, a user of the mobile terminal 1730 may search for a coupon shared through the coupon search/display/use management module 1732 and may use the coupon in a related shore or the like when the coupon is displayed.

In an embodiment, restrictions on the use of coupons may be added depending on whether the mobile terminal 1730 is registered with the vehicle. For example, when the mobile terminal 1730 is a smartphone of a vehicle driver (which is registered with the vehicle), the coupon downloaded to the vehicle may be used without limitation in the mobile terminal through user confirmation. However, for example, when the mobile terminal 1730 is a smartphone of a passenger or a third party, restrictions related to coupon use (e.g., discount content, available store, available period, etc.) may be imposed even after user confirmation.

As described above, in an embodiment according to the present disclosure, by linking map information and coupon information and providing coupon information filtered based on the user information and/or the sensing data of the vehicle as an AR coupon in the driving image of the vehicle, coupon information useful and suitable for a driver is intuitively provided. Also, when a vehicle approaches an AR coupon, the vehicle can download the coupon without an additional operation for acquiring the coupon. Thus, it is possible to naturally acquire coupons while performing safe driving. Also, by allowing a user to easily share a coupon downloaded through a vehicle using a mobile terminal, user convenience is also enhanced.

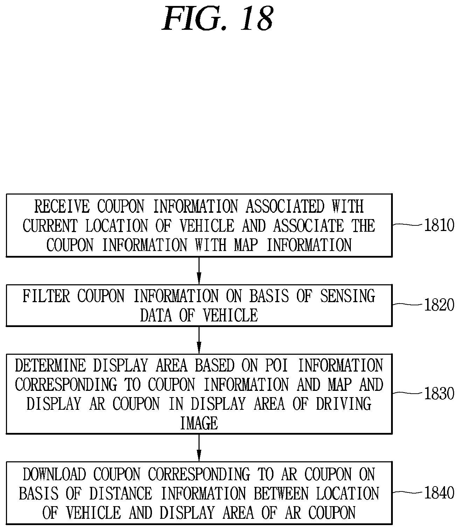

FIG. 18 is a representative flowchart illustrating a method of acquiring an AR coupon according to the operation of the navigation device and the AR platform providing apparatus according to an embodiment of the present disclosure. In the present disclosure, a vehicle navigation device communicates with an AR platform providing apparatus linked to a vehicle so that the AR coupon can be mapped and presented on the driving image and the coupon corresponding to the AR coupon can be easily acquired during the driving of the vehicle. Also, the vehicle navigation device communicates with a coupon server including a coupon registration DB through an interface of the AR platform providing apparatus.

Meanwhile, the following description will focus on an operation method performed by the vehicle navigation device 1720 (see FIG. 17), but it should be noted in advance that the operation method can be understood as being modified into an operation method performed by the AR platform providing apparatus 800 (see FIG. 17) or an operation method performed by an interaction between the vehicle navigation device 1720 and the AR platform providing apparatus 800. Also, mutual communication among the vehicle navigation device 1720, the AR platform providing apparatus 800, and the coupon server 1710 may be performed by transmitting or receiving signals or data using an interface or a communication module. Also, each operation described below is performed by a control unit (controller) or a processor of the vehicle navigation device 1720 unless otherwise specified.

Referring to FIG. 18, first, the AR platform providing apparatus 800 may perform an operation of collecting coupon information associated with the current location of the vehicle and associating the coupon information with map information on the basis of a request received by the vehicle navigation device 1720 (1810).

To this end, the request may include a command to cause the AR platform providing apparatus 800 to collect surrounding coupon information on the basis of the current location of the vehicle and associate the collected coupon information with map information. To this end, the AR platform providing apparatus 800 may receive the map information (e.g., 2D or 3D map information, POI information, building floor number information, etc.) from a cloud server 900 (see FIG. 17), etc. and may associate the collected coupon information with the map information in order to display an AR coupon which will be described below.

Subsequently, the navigation device 1720 may cause the AR platform providing apparatus 800 to filter the collected coupon information on the basis of the sensing data of the vehicle in response to the request received from the navigation device 1720.

In an embodiment, the filtering of the received coupon information may be performed on the basis of the sensing data of the vehicle including vehicle status information, information on the current location of the vehicle, information on a set destination, and information on the driving time of the vehicle.

To this end, the request may include a command to cause the AR platform providing apparatus 800 to filter the collected information stepwise on the basis of at least one of the sensing data of the vehicle, user information, the driving information of the vehicle, environmental information such as traffic conditions, and history information.

Here, the sensing data of the vehicle may include information on the current location of the vehicle based on signals of a GPS/DR sensor, camera image information input through a vision sensor of the vehicle (e.g., advanced driver assistance system (ADAS) sensing information, object-recognition-related information, etc.), surrounding situation information acquired by a vehicle-to-everything (V2X) sensor (e.g., real-time condition information collectible by vehicle-to-vehicle (V2V) and vehicle-to-infrastructure (V2I), driving-related information (e.g., the driving direction, the driving speed, and the like of the vehicle), and the vehicle status information (e.g., remaining fuel/charge amount, replacement periods for vehicle consumables, etc.).

Also, the user information may refer to personal information, such as gender, age, and residence, registered at the time of coupon-related AR service subscription

Also, the vehicle driving information may include route-related driving information such as map/navigation guidance information during the driving of the vehicle, route guidance information (Turn-by-Turn), and attribute information of maps and roads (e.g., road type/property, the widths of roads and lanes, curvature, slope, speed limit, etc.) and function-related driving information such as vehicle driving mode (e.g., manual, autonomous driving, semi-autonomous driving, ADAS function activation, etc.) or electronic Horizon information (which provides data on road slopes and road curve radii).

Also, the environmental information such as traffic conditions may include dynamic traffic information (e.g., road-unit traffic, lane-unit traffic), event information (accident information, hazard warning, etc.), weather information, information on the use of coupons near the current location of the vehicle (e.g., AR coupon use information of other users), etc.

Also, the history information may include user-related history information such as a user's preferred brand, category-of-interest information (registered hashtags, etc.), information on the main activity areas, information on user registration points, and the use history of downloaded coupons and driving-related history information such as a driver's past driving route, recent destination, and recent search place.

To this end, the navigation device 1720 may receive the sensing data of the vehicle including the current location of the vehicle and the like from the vehicle 100 and provide the sensing data of the vehicle to the AR platform providing apparatus 800 in real time. Also, the navigation device 1720 may detect user information, such as a coupon download history and a preferred brand, prestored in a memory and may deliver the user information to the AR platform providing apparatus 800. Also, the AR platform providing apparatus 800 may access, for example, the cloud server 900 (see FIG. 17), collect environmental information such as dynamic traffic information, and filter the coupon information.

As described above, the AR platform providing apparatus 800 may collect, associate, and process various information to filter coupon information suitable for a driver (or a user) and the current location and status of the vehicle 100 in a stepwise manner. Accordingly, it is possible to minimize the exposure of AR coupons that are not required by a user.

Subsequently, the processor of the navigation device 1720 matches a display area determined based on POI information corresponding to the filtered coupon information with a display area in a driving image obtained through the vision sensor and then maps and displays an AR coupon on the display area.

In this case, a process for generating the AR coupon corresponding to the filtered coupon information is similar to the above-described process of generating the AR digital signage corresponding to (the plurality of pieces of) the POI information. For example, the AR platform providing apparatus 800 may calculate a reference point of the display area where the coupon information is to be displayed, determine the display area on the basis of the calculated reference point, and perform a rendering request for displaying the AR coupon on the determined display area on the basis of the sensing data of the vehicle, the POI information of the coupon information, spatial coordinates, and floor number information. The navigation device 1720 may receive a result of the rendering request, map an image of an AR coupon corresponding to the received result of the rendering request on the display area of the driving image, and outputs the image of the AR coupon.

The display area of the AR coupon may be the front side or a lateral side of a building including POI information of the corresponding coupon information as described above. Furthermore, when a plurality of pieces of POI information corresponding to a plurality of pieces of coupon information are included, the AR coupon may be mapped and displayed on the corresponding building in the form of floorwise signage, similar to the above-described generation of floorwise AR digital signage.

In another embodiment, the display area of the AR coupon may be an AR carpet mapped on a front road in the corresponding driving image as described above. In this case, when a plurality of pieces of POI information corresponding to a plurality of pieces of coupon information are included, floorwise AR coupons may be sequentially exposed on the AR carpet. In still another embodiment, the display area of the AR coupon may be changed in position based on condition information (e.g., the detection of driving risk factors such as obstacle appearance, etc.).

While the AR coupon is mapped and displayed on the driving image, the processor of the navigation device 1720 may receive the sensing data of the vehicle (e.g., the current location of the vehicle, the driving-related information of the vehicle, etc.) in real time and detect information on the distance between the current location of the vehicle and the display area of the AR coupon. Also, the processor of the navigation device 1720 may download the coupon corresponding to the AR coupon on the basis of the information on the distance between the current location of the vehicle and the display area of the AR coupon.

Specifically, the processor of the navigation device 1720 may download the AR coupon on the basis of the information on the distance between the location of the vehicle 100 and the display area to which the AR coupon is mapped. Also, the processor of the navigation device 1720 may access the AR platform providing apparatus 800 through the coupon server interface 1722 and transmit a registration request (server upload request) for the downloaded AR coupon. Then, the AR platform providing apparatus 800 may transmit the registration information of the coupon corresponding to the coupon information received according to the registration request to the coupon server 1710 (see FIG. 17) through an interface device.

In this case, in an embodiment, the registration information of the coupon may include coupon information (basic coupon information), a usage status, an expiration date, POI information, and user information corresponding to the coupon (the service registration information of the user who has downloaded the coupon). In another embodiment, the registration of the coupon may further include download-related information of the coupon, for example, the number of available downloads and information on additional restrictions applied to a sharer's downloads (e.g., additional restrictions on available places and available periods).

In an embodiment, based on information on the distance between the location of the vehicle and the display area of the AR coupon, the processor of the navigation device 1720 may download the coupon corresponding to the AR coupon when the distance information is less than a threshold distance. For example, when the vehicle passes through the location of the display area of the AR coupon or enters a place related to the AR coupon while the vehicle is driving, the coupon may be naturally acquired without additional manipulation by the driver.

Depending on the embodiment, when the coupon is downloaded, the processor of the navigation device 1720 may variably map another AR object guiding that the corresponding coupon has been downloaded on the display area of the corresponding AR coupon.

Also, in an embodiment, when a coupon use request is received based on a user input, the processor of the navigation device 1720 may display the identification information of the downloaded coupon on the display unit or the like in a readable form. When a user reads the identification information through a terminal while the identification information of the coupon is displayed, the coupon server is accessed so that a coupon corresponding to the identification information can be downloaded through registered user authentication. Accordingly, it is possible to safely transmit the downloaded coupon from the vehicle to the user terminal.

As described above, according to the present disclosure, it is possible to receive useful coupon information filtered based on the current location of the vehicle, vehicle statuses, and user information in the form of an AR coupon while the vehicle is driving, and also it is possible to naturally acquire a coupon during the driving of the vehicle. Also, by safely transmitting the downloaded coupon from the vehicle to the user terminal, it is possible to provide an effect of increasing the usability of the coupon.

Meanwhile, unlike in the mobile environment, a driver is not free to operate a navigation screen during the driving of the vehicle. Thus, a method of easily acquiring AR coupons without screen manipulation will be proposed below.

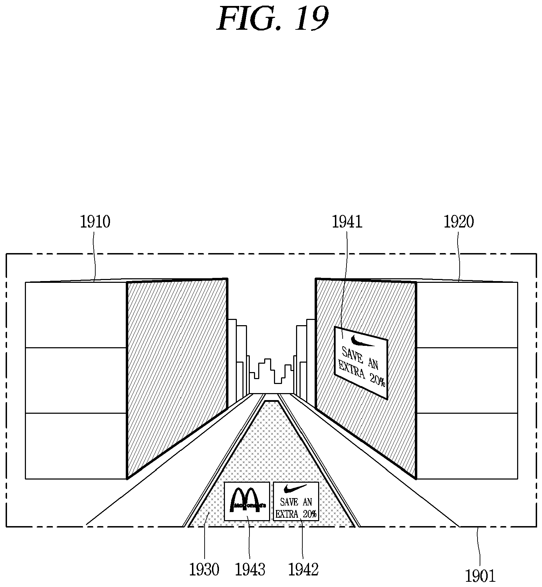

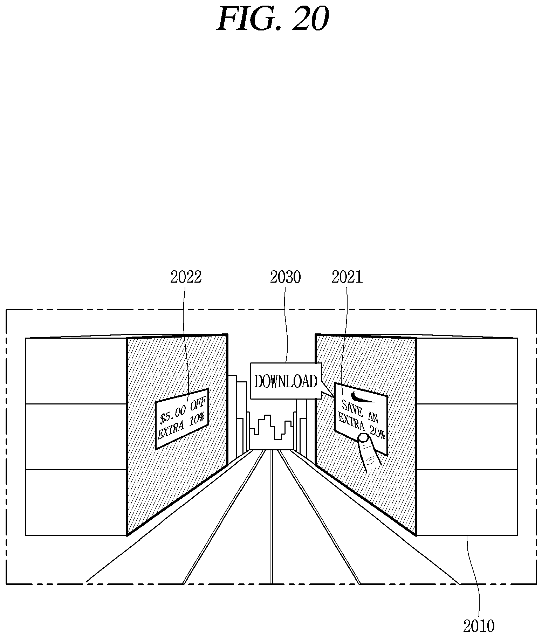

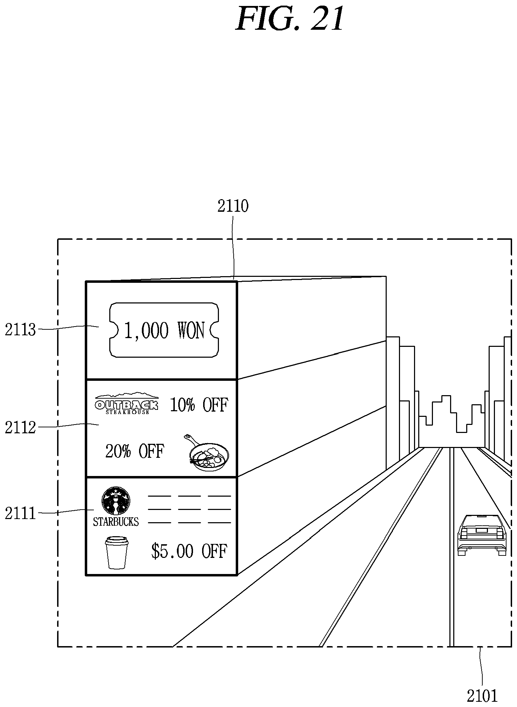

The navigation device 1720 according to the present disclosure may download coupons by applying a different coupon acquisition criterion on the basis of whether the vehicle's destination has been downloaded. Specifically, FIGS. 19 and 20 are examples of a method of acquiring a coupon when the vehicle's destination is not set, and FIG. 21 to 23 are examples of a method of acquiring a related coupon when the vehicle's destination is set.

FIG. 19 is a diagram illustrating a method of acquiring a coupon on the basis of a distance between an AR coupon and the current location of a vehicle according to an embodiment of the present disclosure.

When it is determined that the vehicle's destination is not set, the processor of the navigation device 1720 according to the present disclosure may make a request to collect and filter coupon information near (within a certain distance from) the current location of the vehicle. In this case, the processor of the navigation device 1720 may make a request to collect additional filtered coupon information in conjunction with a pre-registered user selection POIN category.

In this case, the processor of the navigation device 1720 may download the coupon on the basis of the distance between the current location of the vehicle and the AR coupon while the AR coupon is displayed on the driving image.

Specifically, when it is determined based on the sensing data of the vehicle that the distance between the current location of the vehicle and the display area of the AR coupon is less than or equal to a predetermined threshold distance, the processor of the navigation device 1720 may download the coupon corresponding to the AR coupon and transmit information related to the downloaded coupon to the AR platform providing apparatus 800.

In this case, the information related to the downloaded coupon may include user information, POI information, and coupon information corresponding to the downloaded coupon.

For example, as shown in FIG. 19, AR coupons 1941, 1942, and 1943 collected and filtered with respect to the location of the vehicle may be mapped and displayed on at least one of a first building 1910, a second building 1920, and an AR carpet 1930 in a driving image 1901 acquired through the vision sensor of the vehicle.

In this case, the location of the display area of the AR coupon may be changed with respect to the current location and driving direction of the vehicle. For example, the first AR coupon 1941 that has been displayed on the front surface of the second building 1920 at a first time point may be moved on the AR carpet 1930 and then mapped and displayed as a second AR coupon 1942 at a second time point after a certain amount of time has elapsed.

When the vehicle passes through the location of the second AR coupon 1942 of the AR carpet 1930, the corresponding coupon may be automatically downloaded. On the other hand, when the driving direction is changed while the vehicle has not passed through the corresponding point, the AR coupon may disappear from the driving image without being downloaded unless the AR coupon is downloaded through a selection input.

In another embodiment, the location of the display area of the AR coupon may be determined based on the current location and driving speed of the vehicle. For example, the AR coupons 1942 and 1943 may be displayed on the AR carpet 1930 when the driving speed is less than a threshold driving speed (i.e., when the vehicle is driving at low driving speed), and the AR coupon 1941 may be displayed on the front sides or lateral sides of the buildings 1910 and 1920 when the driving speed is greater than or equal to the threshold driving speed (i.e., when the vehicle is driving at high driving speed). In either case, when the vehicle passes through a corresponding location, a coupon of the corresponding location is automatically downloaded.

Meanwhile, the navigation device 1720 according to the present disclosure may assign coupon priority in consideration of service grade, user preference, frequently searched POI category, and the degree of discount included in coupon information in conjunction with the AR platform providing apparatus 800 and may dynamically adjust the size or shape of the AR coupons 1941, 1942, and 1943 on the basis of the priority and then perform the mapping.

FIG. 20 is a diagram illustrating a method of selectively acquiring a presented AR coupon according to an embodiment of the present disclosure.

When all AR coupons provided in a driving image are automatically downloaded, too many coupons may be downloaded, which may cause fatigue because a search should be accompanied to use the coupons. In particular, this may correspond to a case in which coupon information for all POI categories is collected because a user sets no POI category.

Alternatively, although there is an AR coupon of interest while a driver is driving and a user wants to acquire the AR coupon, the coupon may not be downloaded when he or she does not pass through the corresponding location due to circumstances in which the driving direction needs to be changed.

Accordingly, according to the present disclosure, while an AR coupon is mapped and displayed, an individual AR coupon may be downloaded based on an operation on the display unit of the navigation device 1720 or an operation input in the form of a voice command.

In an embodiment, in response to a selection input for the AR coupon mapped and displayed in the display area of the driving image, the processor of the navigation device 1720 may selectively download the coupon corresponding to the AR coupon.

For example, in FIG. 20, while AR coupons 2021 and 2022 are mapped and displayed on a plurality of buildings 2010 in the driving image, the AR coupon 2021 is downloaded regardless of whether a vehicle passes through the corresponding location when a passenger of the vehicle inputs the selection of the specific AR coupon 2021 to be downloaded. Accordingly, an AR object 2030, which guides that the corresponding coupon has been downloaded, may be mapped and displayed near the corresponding location. The AR coupon 2021 may disappear from the driving image at a certain time after the AR coupon 2021 is displayed.

In an embodiment, this selection input may be performed through another display device (e.g., RSE, etc.) in the vehicle linked to the navigation device 1720, and in this case, the selection input may be recognized by the navigation device 1720 through signal transmission.

FIGS. 21, 22, and 23 are diagrams illustrating a method of changing the displaying of an AR coupon according to how close a vehicle is to its destination when a POI location corresponding to the AR coupon is set as the destination according to an embodiment of the present disclosure. The navigation device 1720 according to the present disclosure may determine the display area of the AR coupon in association with the current location of the vehicle and the preset destination on the basis of the location of POI information corresponding to coupon information.

FIG. 21 shows an example of a method of mapping and displaying an AR coupon when a vehicle is spaced at least a threshold distance range from a destination.

When specific POI information is set as the destination and the distance from the current location of the vehicle to the preset destination is greater than or equal to the threshold distance range, the processor of the navigation device 1720 may determine the front or side of the building area as a display area and may map and display a corresponding AR coupon in the determined display area in the form of digital signage. The floorwise mapping and displaying of AR coupons is similar to the floorwise displaying of AR digital signage, and thus a detailed description thereof will be omitted.

For example, while the vehicle is spaced at least a threshold distance range from the destination, AR coupons 2111, 2112, and 2113 may be mapped and displayed on a floor-by-floor basis on a building 2110 in a driving image 2101 acquired through a vision sensor of the vehicle.

Meanwhile, for example, even if the vehicle approaches the building 2110 or the driving speed becomes low, the AR coupons 2111, 2112, and 2113 may be mapped and displayed without changing the position of the display area (e.g., without displaying on an AR carpet) when the corresponding location is not the destination POI. Alternatively, for example, in a section where turn-by-turn (TBT) guidance is present, the navigation device 1720 may operate such that the AR coupons 2111, 2112, and 2113 are displayed only on the building 2110 without changing the display area in consideration of guidance information priority.

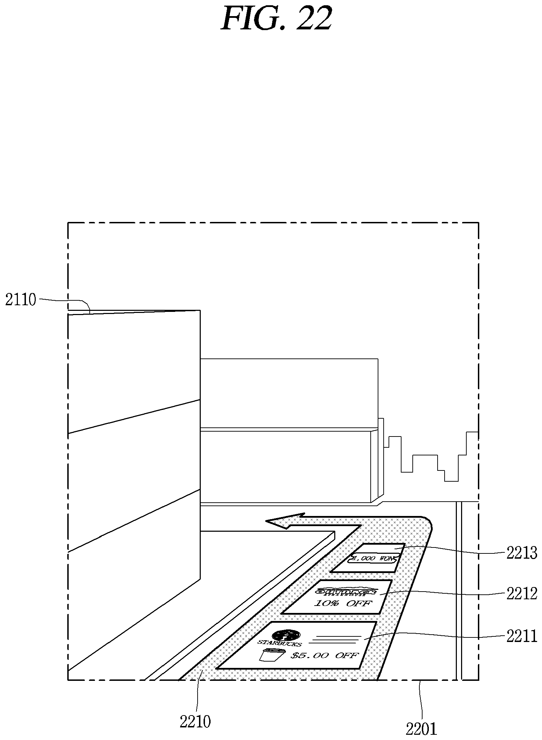

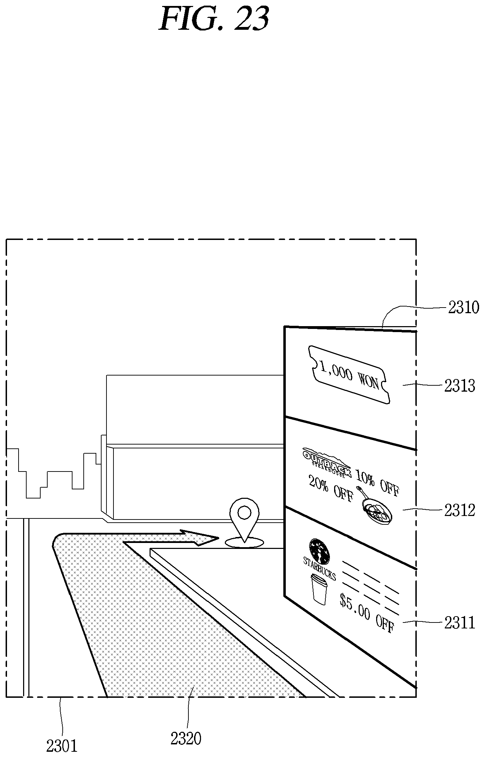

FIGS. 22 and 23 show an example of a method of mapping and displaying an AR coupon when a vehicle approaches within the threshold distance range from the destination.

When POI information corresponding to coupon information is set as the destination and the distance from the current location of the vehicle to the preset destination is less than the threshold distance range, the processor of the navigation device 1720 according to the present disclosure may display an AR carpet for guiding entry to the destination on a road in the driving image as a display area and may sequentially map and display corresponding AR coupons on the AR carpet.

For example, in FIG. 22, the related AR coupons 2211, 2212, and 2213 are sequentially mapped and displayed on the AR carpet 2210 that guides entry into the building 2110 including the destination POI in the driving image 2201. At this time, although not shown, a specific AR coupon matched to destination POI information may be highlighted.

When the vehicle passes through the AR carpet 2210, the AR coupons 2211, 2212, and 2213 may be sequentially downloaded and disappear from the driving image 2201.

I information of the coupon set as the destination. according to the present disclosure may map and display a changed AR coupon on the front or side of the building area including the destination in the form of digital signage while the AR carpet is displayed on a road in the driving image acquired through the vision sensor.

For example, in FIG. 23, while floorwise AR coupons 2311, 2312, and 2313 are displayed on the front of a building 2310 in a driving image 2301, the vehicle may further approach the building 2310. In this case, when a portion of the building 2310 is not recognized through the vision sensor, a scaled (or down-scaled) AR coupon may be mapped and displayed. In this case, an AR carpet 2320 that guides entry into the building 2310 including the destination POI information may also be displayed. Also, when it is recognized that the vehicle is about to enter the building 2310 (e.g., the reduction of the driving speed, the changing of the driving direction to the parking lot entrance, etc.), as shown in FIG. 22, AR coupons may be sequentially mapped and displayed on the AR carpet 2320 to guide the vehicle to download the AR coupons sequentially or collectively while the vehicle is driving.

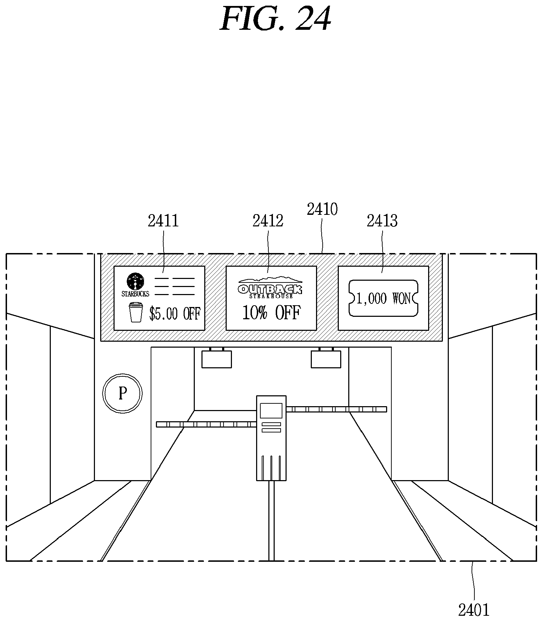

FIG. 24 is a diagram related to the description of the acquisition time and range of an AR coupon according to an embodiment of the present disclosure.

As described above, based on distance information between the current location of the vehicle and an AR coupon or distance information between the current location and the destination, the navigation device 1720 according to the present disclosure may download corresponding coupon information. Meanwhile, the vehicle may enter a building (or its parking lot) including POI information corresponding to the AR coupon without passing through the AR coupon while driving. In this case, the acquisition time of the AR coupon is a point at which the AR coupon is downloaded when the vehicle enters the corresponding building.

For example, referring to FIG. 24, when it is recognized that the vehicle is about to enter a parking lot entrance, AR coupons 2411, 2412, and 2413 may be mapped and displayed in a specific area 2410 of the parking lot entrance, for example, an upper portion of the entrance.

In this case, when the plurality of downloadable AR coupons 2411, 2412, and 2413 are collectively downloaded all at once when the vehicle passes through the parking lot entrance. At this time, although not shown in the specific area 2410, when there is available coupon information in the corresponding building, corresponding coupons may also be downloaded and registered with the coupon server 1710.

To this end, the processor of the navigation device 1720 may download a plurality of coupons corresponding to the plurality of AR coupons included in the building area and transmit information related to the plurality of downloaded coupons to the AR platform apparatus 800 when the vehicle enters the building area including POIN information corresponding to the AR coupon.

Also, although not shown, when the vehicle enters a public parking lot, coupon information related to multiple nearby stores that use the public parking lot may be collectively downloaded. In this case, only a portion of the downloaded coupon information may be mapped and displayed as the AR coupon, and the coupon information that is not displayed is also collectively downloaded.

Meanwhile, there is a restriction in that coupons obtainable through the above-described vehicle navigation device 1720 can be downloaded only by a vehicle that intends to use a corresponding service, unlike normal mobile coupons. Therefore, in order to actually use a coupon obtained by the navigation device 1720 for usability enhancement, it should be possible to share the coupon with a movable mobile terminal (e.g., a smartphone).

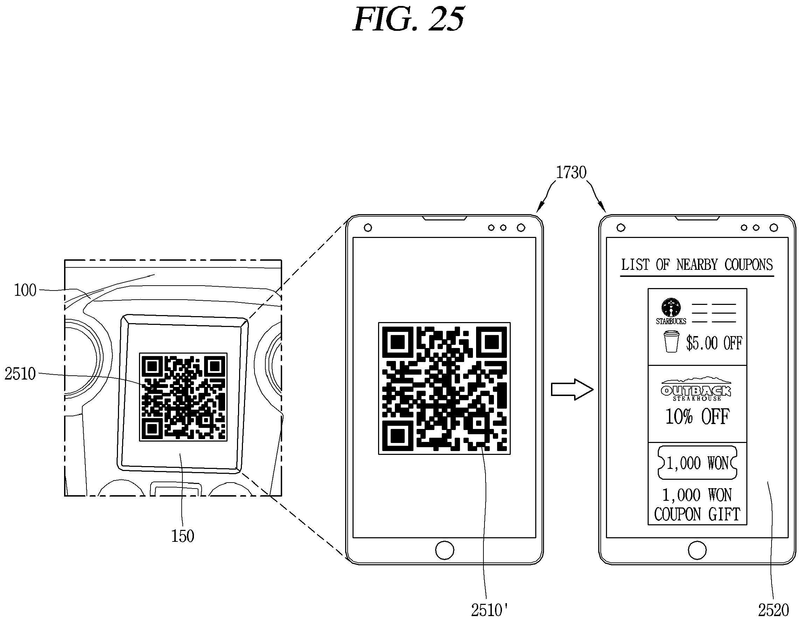

FIG. 25 is a diagram illustrating a method of a mobile terminal sharing coupon information downloaded in a vehicle navigation device according to an embodiment of the present disclosure.

The vehicle navigation device 1720 may include a communication module configured to access one or more mobile terminals to perform communication.

Here, the mobile terminal may be one of a smartphone, a mobile phone, a navigation system, a computer, a laptop computer, a personal digital assistant (PDA), a portable multimedia player (PMP), a wearable device, an Internet of things (loT) device, a virtual reality (VR) device, and an augmented reality (AR) device. Also, the communication module may be a communication module that uses a wireless network such as a mobile network, Wireless LAN (WLAN), Wi-Fi, Bluetooth, and ZigBee.

The vehicle navigation device 1720 may display identification information of the downloaded coupon through its own display unit or a display module 150 (e.g., Center Information Display (CID), Rear Seat Entertainment (RSE), and a head-up display (HUD)) in the vehicle 100.

At this time, the identification information may be QR identification information 2510 as shown in FIG. 25 and may be implemented as different types of identification information including other user information, downloaded coupon information, and/or path information (e.g., a link address, etc.) for the AR platform apparatus 800 or the coupon server 1710.

The mobile terminal 1730 connected to the navigation device 1720 may access the AR platform apparatus 800 through an interface when the mobile terminal 1730 reads the displayed identification information in a way such as scanning.

Subsequently, when a request to download some/all of the coupons registered in the DB of the coupon server 1710 is transmitted based on a result of user authentication in the connected mobile terminal 1730, the coupon server 1710 performs processing for the request based on the result of the user authentication. For example, when the user authentication is successful, coupons of a corresponding user stored in the DB of the coupon server 1710 may be collectively downloaded and stored in the connected mobile terminal 1730. On the other hand, when the user authentication fails, the coupon server 1710 may transmit a signal informing the authentication failure to the connected mobile terminal 1730.

As shown in FIG. 25, when the connected mobile terminal 1730 scans the QR identification code 2510 displayed on the display of the navigation device (2510'), a list 2520 of the downloaded coupons is displayed on the screen on the basis of the result of the user authentication.

When the coupon downloaded to the connected mobile terminal 1730 is shared in the above way, the coupon server 1710 updates the record. In this case, user information and identification information for the mobile terminal 1730 that has downloaded the coupon may also be recorded in the DB.

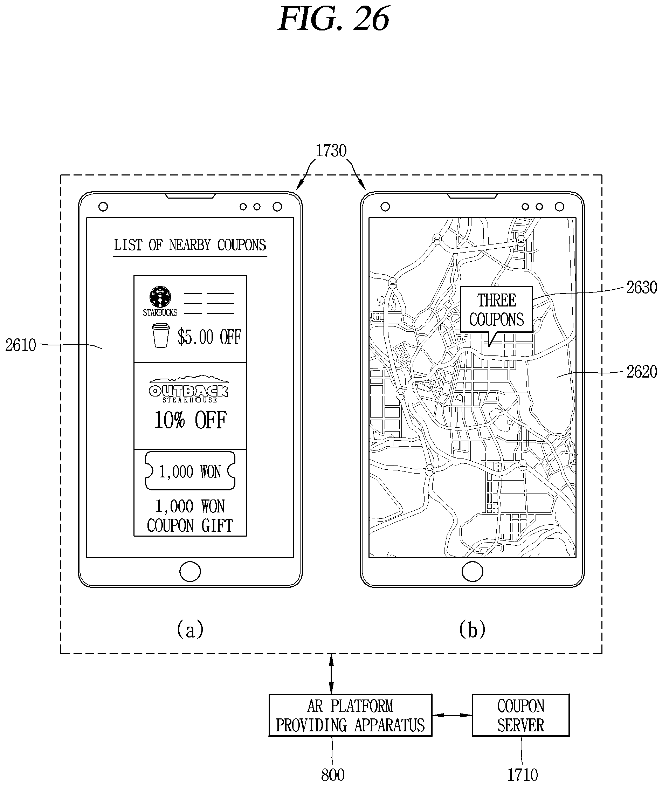

FIGS. 26, 27, and 28 are exemplary diagrams illustrating a method of displaying, linking, and using coupon information shared with a mobile terminal according to an embodiment of the present disclosure. The following description includes a coupon sharing method and a coupon use method for not only the user of the navigation device 1720 but also other users such as a passenger in the vehicle.

Preferably, a coupon downloaded to the navigation device 1720 may be used by not only a driver (including a user who has registered for a service or a mobile terminal of the user) but also other passengers in the vehicle.

The coupon downloaded to the navigation device 1720 on the basis of the location of the vehicle may be shared with mobile terminals of other users, and the other users may use the shared coupon using the corresponding mobile terminals. To this end, the mobile terminal 1730 may execute a preset application (e.g., a coupon service application, etc.) and may access the coupon server 1710 through an interface of the navigation device 1720 or an interface of the AR platform providing apparatus 800.

After the mobile terminal 1730 accesses the coupon server 1710 and then the validation of the user authentication is completed, coupons downloaded to the navigation device 1720 are downloaded from the DB of the coupon server 1710. Here, the validation of the user authentication refers to user verification through identity (ID)/password (PW) or phone number authentication.

The downloaded coupon may be displayed on the mobile terminal 1730 in various forms.

For example, as shown in FIG. 26A, shared coupons may be displayed as a list of nearby coupons. Alternatively, as shown in FIG. 26B, shared coupons may be displayed as POI information 2630 together with coupon number information in connection with a map screen 2620.

In order to share the coupon downloaded through the navigation device 1720 of the vehicle in the above way, the mobile terminal 1730 that wants coupon sharing may access the coupon server 1710 through the interface of the AR platform providing apparatus 800 as shown in FIG. 26 or may directly access the coupon server 1710 through a separate web connection, etc.

Meanwhile, in an embodiment, a coupon use restriction may be set for sharing by a third party other than a user who has registered for a service, such as a passenger in the vehicle. To this end, the coupon server 1710 may register, in the DB, information about a download limit number for coupon registration and coupon use restriction conditions (e.g., a region and a deadline for which use is permitted) for the coupon download of the third party. Also, the third party may download the coupon registered in the DB after only simple verification information (e.g., authentication number verification for verifying passengers) rather than authentication such as the above-described validation.

For example, a coupon downloaded to a mobile terminal of a third party may be restricted to use in a limited area and a limited time. To this end, a passenger registration process may be performed in advance through the navigation device 1720 of the vehicle. The passenger registration process may be completed, for example, by setting passenger information input (regulation on the maximum number of persons to be registered), passenger authentication, and coupon use restriction conditions (e.g., an area and a deadline for which use is allowed).

Also, for example, when the pre-registered download limit number is exceeded, information indicating that the download cannot be allowed due to the number of downloads exceeded may be displayed on the mobile terminal of the third party.

As described above, according to the present disclosure, it is possible to expand usability by allowing a third party to download a coupon downloaded to the navigation device 1720 through his or her mobile terminal, and it is also possible to prevent the abuse of unauthorized coupon use by registering use/download restrictions.

In this way, when a coupon is shared with the mobile terminal 1730 of the user or a third party, the shared coupon may be used to receive additional information in connection to other functions (e.g., route guidance, payment, etc.). FIG. 27 exemplarily shows a method of linking coupon information shared with the mobile terminal 1730 to a route guidance function.

In FIG. 27, as a nearby-coupon list 2710 is displayed on the screen of the mobile terminal with which the coupon is shared, a plurality of coupons 2711, 2712, and 2713 downloaded and shared through the navigation device 1720 are displayed. In addition, location icons 2723 and 2721 for setting POI information corresponding to each coupon as a destination may be marked on at least some of the coupons 2711, 2712, and 2713. In this case, the corresponding location icons 2723 and 2712 may refer to destination setting icons.

To this end, POI information corresponding to the coupon may be registered in the coupon server 1710 when the coupon is downloaded to the navigation device 1720, and link information that associates the POI information to the destination may be downloaded when the coupon is downloaded (i.e., shared) through the mobile terminal 1730. Accordingly, a user who has received the shared coupon may immediately receive route guidance to a shore location where the coupon can be used.

For example, as shown in FIG. 27A, when an input to the location icon 2721 for the specific coupon 2711 is received, a route guidance operation for guiding from the current location to a POI location corresponding to the location icon 2721 is executed in conjunction with a route guidance application (e.g., a navigation application) installed on the mobile terminal and is initiated by setting the corresponding POI location as a destination.

In other words, only by selecting the location icon 2721 for the specific coupon 2711, the nearby-coupon list 2710 is switched to a list of nearby coupons 2710 is switched to a route guidance screen 2720. The route guidance screen 2720 may include a current location 2731, a POI destination 2733 where the specific coupon 2711 can be used, and guidance route information 2732.

Meanwhile, although not shown, when there is a plurality of pieces of information on POIs where the specific coupon 2711 can be used, information on the closest POI may be preferentially recommended based on the current location, but a destination setting screen including information on other POIs may be provided through the screen of the mobile terminal in the form of a list.

Also, although not shown, when payment is made through a mobile terminal in a store where coupons can be used, a linked coupon service application may be executed, and a coupon available at the current location among the downloaded coupons or identification code of the corresponding store including the coupon may be provided in the form of a pop-up window.

Coupons downloaded to the mobile terminal 1730 may be used after an individual search through the coupon management module (see FIG. 17) or may be automatically selected and used after authentication through the user authentication module (see FIG. 17).

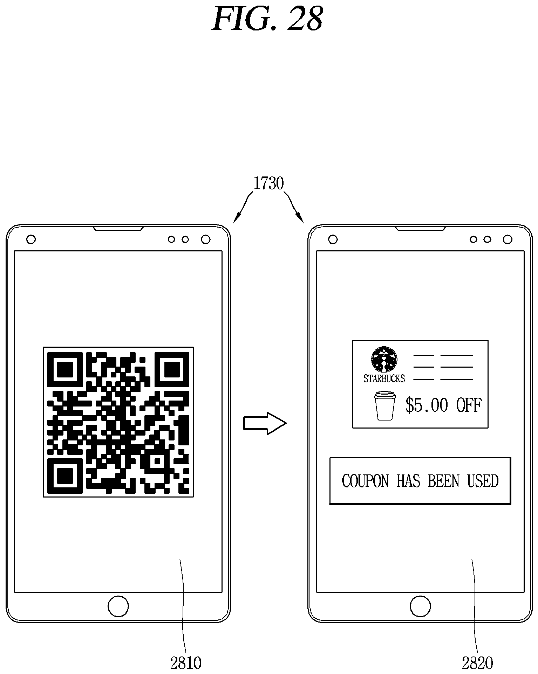

FIG. 28 shows an example of a method of using an individual coupon downloaded to a mobile terminal. After the execution of a preset application in the mobile terminal 1730, when an individual coupon is found through a search for a coupon/shop to be used, QR code information 2810 of the found coupon is displayed as coupon identification information.

When the QR code information 2810 is scanned, the corresponding coupon is used, and notification information 2820 notifying the completion of use is displayed on the screen. Then, the coupon server 1710 updates the DB with the coupon use completion record and the use completion information may be transmitted, as event notification information through an interface, to the AR platform apparatus 800 and the vehicle navigation device 1720 that has downloaded the coupon first.

As another example, after the preset application is executed in the mobile terminal, user QR code information matched to the registered user identification information may be output to the screen by inputting registered user information. In this case, by scanning the corresponding user QR code information, it is possible to access the coupon server 1710 based on matched user information. Accordingly, all coupons downloaded by a corresponding user are found from the DB of the coupon server 1710, and among the coupons, coupons available at the current location are automatically applied.

Subsequently, the coupon server 1710 updates the DB with the coupon use completion record and the use completion information may be transmitted, as event notification information through the interface, to the AR platform apparatus 800 and/or the vehicle navigation device 1720 that has downloaded the coupon first.

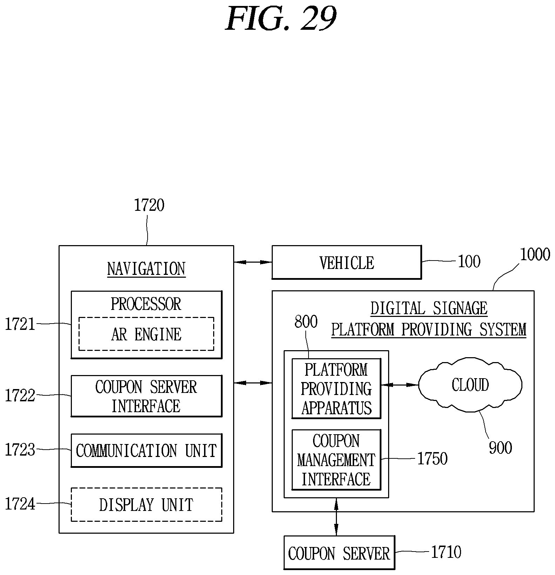

FIG. 29 is a block diagram illustrating a method of operating a vehicle navigation device 1720 in conjunction with a vehicle, a coupon server, and an AR platform providing apparatus according to an embodiment of the present disclosure.

In FIG. 29, the navigation device 1720 according to the present disclosure may include a processor 1721, a coupon server interface 1722, a communication unit 1723, and a display unit (or an image sensor) 2724. The digital signage platform providing system may include an AR platform providing apparatus 800 and one or more clouds 900 for communicating with the AR platform providing apparatus 800. Also, the AR platform providing apparatus 800 may include a coupon management interface 1750 for communicating with the coupon server 1710.

The navigation device 1720 may receive the sensing data of the vehicle from a system such as a sensor, a vehicular electronic device, and an advanced driver assistance system (ADAS) provided in the vehicle 100 through the communication unit 1723.

The navigation device 1720 may transmit the sensing data of the vehicle to the digital signage platform providing system 1000 through the communication unit 1723 and may receive POI information associated with the sensing data of the vehicle. To this end, the digital signage platform providing apparatus 800 and the cloud 900 may be communicatively connected to each other.

The AR platform providing apparatus 800 may collect coupon information by accessing the coupon server 1710 through the coupon management interface 1750, link the collected coupon information to map information, and perform customized filtering on the collected coupon information on the basis of the current location of the vehicle, the sensing data of the vehicle, and the user information. The filtered coupon information is merged to match the driving image obtained through the vision sensor of the vehicle for AR rendering and is transmitted to the navigation device 1720.

A display unit 1724 of the navigation device 1720 displays the driving image acquired through the vision sensor (e.g., a camera, an image laser sensor, etc.) of the vehicle. The processor 1721 of the navigation device 1720 transmits information related to the driving image to the AR platform providing apparatus 800 of the digital signage platform providing system 1000 through the communication unit 1723.

The AR platform providing apparatus 800 may filter and process the coupon information to perform merging for generating the AR coupon on the basis of the sensing data of the vehicle received from the vehicle 100, map information associated with the sensing data of the vehicle collected from the cloud 900, POI information, the spatial location of the building including a plurality of pieces of POI information, floor number information, POI-related advertisement information, information on the driving image received through the navigation device 1720, the user information, and the like and may transmit the merging result to the navigation device 1720.

The navigation device 1720 may receive a result of a rendering request that is for generating the AR coupon received from the AR platform providing apparatus 800 and may map the AR coupon to the building in the driving image on a floor-by-floor basis through the processor 1721. Also, the navigation device 1720 may receive a result of a rendering request that is received from the AR platform providing apparatus 800 to generate the AR carpet for guiding entry into a specific area and may map the result on the road in the driving image through the processor 1721 in the form of an AR carpet. To this end, the processor 2721 may be embedded in or interoperable with an AR engine. Also, the navigation device 1720 may sequentially map AR coupons on the AR carpet.

The navigation device 1720 may vary the display area to which the AR coupons are to be mapped on the basis of the shape of the image of the building in the driving image acquired through the vision sensor and the sensing data of the vehicle 100 (the current location, the driving speed, and the driving direction of the vehicle) received from the vehicle 100. For example, the navigation device 1720 may vary the display area of the building area in the driving image or sequentially map the AR coupons on the AR carpet on the basis of distance information between the current location of the vehicle and the POI information of the coupon set as the destination.

The navigation device 1720 may move and map, to the AR carpet, AR coupon signage that has been mapped on the building on a floor-by-floor basis on the basis of the sensing data of the vehicle 100 (the current location, the driving speed, and the driving direction of the vehicle) received from the vehicle 100.

The navigation device 1720 may transmit information on the varied display area to the AR platform providing apparatus 800 and may receive the sensing data of the vehicle from the vehicle 100 in real time and vary the display area in real time. Here, the varied display area may be determined to be a location other than the building area in the driving image so as to secure visibility, and the other location may be, for example, a road edge adjacent to the building area, a guard rail, or a sidewalk adjacent to the building area, and the surface of a driving road. Also, the varied display area may be the AR carpet mapped on the road in the driving image.

The navigation device 1720 may download the coupon corresponding to the AR coupon on the basis of information on the distance between the location of the vehicle 100 and the display area of the AR coupon. Information on the downloaded coupon may be transmitted to the coupon server 1710 through the coupon server interface 1722 directly or via the coupon management interface 1750 of the AR platform providing apparatus 800. The coupon server 1710 registers the downloaded coupon and records the registered coupon in the DB on the basis of information regarding the received coupon.

When information on the change of use, sharing, or the like of the coupon downloaded to the navigation device 1720 is received, the coupon management interface 1750 of the AR platform providing apparatus 800 detects and delivers the received information to the coupon server 1710. The coupon server 1710 updates a coupon registration DB on the basis of the change information.

As described above, according to some embodiments of the present disclosure, by mapping and displaying AR signage on a building in a driving image such that the AR signage is similar to a real signboard, it is possible to solve the awkwardness caused by artificially displaying an AR object on a driving route screen in a conventional manner. Also, it is possible to solve the conventional limitation of displaying only one advertisement in one area even if AR technology is used, and thus advantageously, it is possible to provide extensibility for providing a plurality of various advertisements to one building. As described above, by linking map information and coupon information and providing coupon information filtered based on user information and/or the sensing data of the vehicle as an AR coupon in the driving image of the vehicle, it is possible to intuitively provide coupon information useful and suitable for a driver. Furthermore, when a vehicle approaches an AR coupon, the vehicle can download the coupon without an additional operation for acquiring the coupon. Thus, it is possible to naturally acquire coupons while performing safe driving. Also, by allowing a user to easily share a coupon downloaded through a vehicle using a mobile terminal, usability is also enhanced.

The present disclosure can be implemented as computer-readable codes (applications or software) in a program-recorded medium. The method of controlling the autonomous vehicle can be realized by a code stored in a memory or the like.

The computer-readable medium may include all types of recording devices each storing data readable by a computer system. Examples of such computer-readable media may include hard disk drive (HDD), solid state disk (SSD), silicon disk drive (SDD), ROM, RAM, CD-ROM, magnetic tape, floppy disk, optical data storage element and the like. Also, the computer-readable medium may also be implemented as a format of carrier wave (e.g., transmission via an Internet). The computer may include the processor or the controller. Therefore, it should also be understood that the above-described embodiments are not limited by any of the details of the foregoing description, unless otherwise specified, but rather should be construed broadly within its scope as defined in the appended claims, Therefore, all changes and modifications that fall within the metes and bounds of the claims, or equivalents of such metes and bounds are therefore intended to be embraced by the appended claims.

## Claims

1. A navigation device linked to a vehicle, the navigation device comprising:
a communication unit configured to communicate with a system for providing an augmented reality (AR) platform;
a coupon service interface configured to communicate with a server for managing coupons through an interface of the system; and
a control unit configured to control the communication unit to collect coupon information associated with the current location of the vehicle and transmit a request for associating the coupon information with map information to the system,
wherein the control unit is configured to:
receive a result of the request from the system, recognizes a location of POI information corresponding to coupon information filtered based on sensing data of the vehicle among the coupon information associated with the map information;
transmit, to the system, a rendering request for displaying an AR coupon corresponding to the filtered coupon information in a display area determined based on the location of the POI information;
receive a result of the rendering result and map and display the AR coupon in the display area included in a driving image acquired through a vision sensor of the vehicle in real time;
download a coupon corresponding to the AR coupon on the basis of information on a distance between the vehicle and the display area of the AR coupon; and
transmit information related to the downloaded coupon to the system and request the system to upload the information related to the downloaded coupon to the server for managing coupons.

2. The navigation device of claim 1, wherein when it is determined based on the sensing data of the vehicle that the distance between the current location of the vehicle and the display area of the AR coupon is less than or equal to a predetermined threshold distance, the control unit downloads the coupon corresponding to the AR coupon and transmits the information related to the downloaded coupon to the system.

3. The navigation device of claim 1, wherein the information related to the downloaded coupon comprises user information, point-of-interest (POI) information, and coupon information corresponding to the downloaded coupon.

4. The navigation device of claim 1, wherein in response to a selection input for the AR coupon mapped and displayed in the display area of the driving image, the control unit selectively downloads the coupon corresponding to the AR coupon.

5. The navigation device of claim 1, wherein the display area determined based on the location of the POI information is associated with the current location of the vehicle and a preset destination.

6. The navigation device of claim 5, wherein when the POI information is set as a destination and a distance from the current location of the vehicle to the preset destination is greater than or equal to a threshold distance range, the control unit determines the front or side of a building area including the destination as a display area and maps and displays the AR coupon in the determined display area in a digital signage form.

7. The navigation device of claim 5, wherein when the POI information is set as a destination and a distance from the current location of the vehicle to the preset destination is less than a threshold distance range, the control unit displays an AR carpet for guiding entry to the destination on a road in the driving image as a display area and sequentially maps and displays the AR coupon on the AR carpet.

8. The navigation device of claim 7, wherein while the AR carpet is displayed on the road in the driving image, a varied AR coupon is mapped and displayed on the front or side of the building area including the destination in a digital signage form.

9. The navigation device of claim 1, wherein when the vehicle passes through the location of the POI information corresponding to the AR coupon, the control unit downloads the coupon corresponding to the AR coupon and transmits the information related to the downloaded coupon to the system.

10. The navigation device of claim 1, wherein when the vehicle enters the building area including the POI information corresponding to the AR coupon, the control unit downloads a plurality of coupons corresponding to a plurality of AR coupons included in the building area and transmits information related to the plurality of downloaded coupons to the system.

11. The navigation device of claim 1, wherein
the communication unit comprises a module configured to access a mobile terminal and perform communication, and
the control unit displays identification information of the downloaded coupon on a display unit to share the downloaded coupon with the mobile terminal and requests the mobile terminal to read the identification information to access the system and download a coupon uploaded to the server on the basis of a result of user authentication.

12. An augmented reality (AR) platform providing apparatus linked to a vehicle, the AR platform providing apparatus comprising:
a communication module configured to communicate with a navigation device linked to the vehicle;
a coupon management interface configured to communicate with a server for managing coupons;
a memory; and
at least one processor communicatively connected to the memory and configured to execute at least computer-readable program included in the memory,
wherein the at least one program includes instructions to:
receive coupon information associated with the current location of the vehicle from the server and associate the coupon information with map information in response to a request received from the navigation device;
filter the received coupon information on the basis of sensing data of the vehicle;
perform a rendering request for displaying an AR coupon corresponding to the coupon information in a display area determined based on point-of-interest (POI) information corresponding to the coupon information;
transmit a result of the rendering request to the navigation device and transmit a request for the navigation device to map an AR coupon corresponding to the result of the rendering request in the display area included in a driving image acquired through a vision sensor in real time; and
transmit registration information of the coupon corresponding to the AR coupon to the server to download the AR coupon on the basis of distance information between the location of the vehicle and the display area to which the AR coupon is mapped.

13. The AR platform providing apparatus of claim 12, wherein the registration information of the coupon includes coupon information, a usage status, an expiration date, POI information, and user information of the coupon.

14. The AR platform providing apparatus of claim 12, wherein the filtering of the received coupon information is performed based on the sensing data of the vehicle including status information of the vehicle, information on the current location of the vehicle, information on a preset destination, and information on a driving time of the vehicle.

15. The AR platform providing apparatus of claim 12, wherein
the communication module further comprises a sub-module for performing communication with a mobile terminal, and
in response to receiving a signal for accessing the AR platform providing apparatus through a preset application, the processor requests the mobile terminal to perform user authentication and download a coupon uploaded to the server on the basis of a result of the user authentication.

16. The navigation device of claim 12, wherein when it is determined based on the sensing data of the vehicle that a distance between the current location of the vehicle and the display area of the AR coupon is less than or equal to a predetermined threshold distance, the processor downloads the coupon corresponding to the AR coupon, transmits the coupon to the navigation device, and transmits information related to the downloaded coupon to the server.

17. An augmented reality (AR) platform providing system comprising:
a server for managing coupons;
an AR platform providing apparatus configured to communicate with the server;
a navigation device linked to a vehicle; and
a mobile terminal,
wherein
the AR platform providing apparatus receives coupon information associated with the current location of the vehicle from the server and associates the coupon information with map information in response to a request received from the navigation device, filters the received coupon information on the basis of sensing data of the vehicle, and performs a rendering request for displaying an AR coupon corresponding to the coupon information in a display area determined based on point-of-interest (POI) information corresponding to the coupon information,
the navigation device receives a result of the rendering request, maps and displays, in real time, an AR coupon corresponding to the received result in the display area included in a driving image acquired through a vision sensor, downloads a coupon corresponding to the AR coupon when it is detected that the vehicle approaches within a certain range from the display area of the AR coupon, and transmits information related to the downloaded coupon to the system to request the system to upload the information related to the downloaded coupon to the server,
the server performs validation of the information related to the downloaded coupon received from the system and stores the information related to the downloaded coupon in a database and registers the coupon on the basis of a result of the validation, and
the mobile terminal executes a preset application to access the AR platform providing apparatus and downloads a coupon uploaded to the server on the basis of a result of the user authentication.
